(19) Europäisches Patentamt
European Patent Office
Office européen des brevets

(11) EP 3 882 856 A1

(12) EUROPÄISCHE PATENTANMELDUNG

(43) Veröffentlichungstag:
22.09.2021 Patentblatt 2021/38

(51) Int Cl.:
*G06T 7/70* (2017.01)

(21) Anmeldenummer: 20163693.3

(22) Anmeldetag: 17.03.2020

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Carl Zeiss Industrielle Messtechnik GmbH
73447 Oberkochen (DE)

(72) Erfinder:
• Karl, Matthias
89551 Königsbronn (DE)
• Nguyen Cong, Trinh
73525 Schwäbisch Gmünd (DE)

(74) Vertreter: Altmann Stößel Dick Patentanwälte PartG mbB
Dudenstraße 46
68167 Mannheim (DE)

(54) **VERFAHREN UND VORRICHTUNG ZUM BESTIMMEN EINER POSE**

(57) Es wird ein computerimplementiertes Verfahren zum Bestimmen einer Pose mindestens eines Zielobjekts (112) in einer Szene (114) vorgeschlagen. Das Verfahren umfassend die folgenden Schritte:

a) Bereitstellen eines digitalen Trainingsdatensatzes, wobei der Trainingsdatensatz eine Mehrzahl von 3D-Simulationen mindestens einer, mit mindestens einem Sensor (116) eines Posenbestimmungssystems (110) aufzunehmenden, Szene (114), welche das Zielobjekt (112) aufweist, und mit jeweils bekannter Pose des Zielobjekts (112) umfasst, wobei der Sensor (116) mindestens einen Bildsensor und/oder mindestens einen Tiefensensor aufweist;

b) Parametrisieren eines Models zur Bestimmung der Pose basierend auf dem digitalen Trainingsdatensatz, wobei das Model mindestens einen Algorithmus zum Bestimmen einer Pose des Zielobjekts (112) aus mit dem Sensor (116) aufgenommenen Daten der Szene (114) umfasst;

c) Bereitstellen des parametrisierten Models an das Posenbestimmungssystem (110);

d) Aufnehmen von Daten der Szene (114) mit dem Sensor (116);

e) Auswerten der aufgenommenen Daten der Szene (114), wobei das Auswerten ein Bestimmen der Pose des Zielobjekts (112) unter Verwendung des parametrisierten Modells umfasst.

Fig. 1 A

**Beschreibung**

Technisches Gebiet

Die Erfindung betrifft ein computerimplementiertes Verfahren zum Bestimmen einer Pose mindestens eines Zielobjekts in einer Szene, ein Computerprogramm, ein Posenbestimmungssystem und Zahlreiche Verwendungen. Die vorliegende Erfindung betrifft insbesondere das Gebiet des Automobilbaus, wobei auch andere Einsatzgebiete denkbar sind.

Technischer Hintergrund

Im Automobilbau können auf einer Herstellungslinie, auch als Fertigungslinie bezeichnet, mehrere unterschiedliche Modelle, z.B. Cabrio, Coupe, Combi, oder SUV, produziert werden. Die Herstellungslinie kann dabei eine Mehrzahl von Zellen aufweisen. In einer Zelle der Fertigungslinie können Arbeiten oder Inspektionen erfolgen, welche insbesondere von Robotern ausgeführt werden. Die zu verrichtende Arbeit, und damit auch die Bewegung der Roboter, bzw. die Manipulation durch die Roboter, in einer Zelle kann abhängig davon sein, welches Modell sich gerade in der Zelle befindet. Beispielsweise kann im Rohbau eine Position von anzubringenden Anbauteilen, Schweißnähten oder Nieten sowie eine zu messende Position oder zu inspizierende Spalt-Bündigkeit abhängig von dem Modell sein. Beim Zusammenbau kann die Anbringung der Art und gegebenenfalls der Position von Ausstattungsmerkmalen abhängig von Modell und/oder zusätzlich von Kundenwünschen sein. Im Automobilbau ist das insbesondere in der Endmontage nach Fertigbau der Karosserie und der Lackierung wichtig.

Wenn ein Automobilbauer ein neues oder zusätzliches Modell auf eine Herstellungslinie bringen will, ist grundsätzlich ein enormer Einrichtungsaufwand an jeder einzelnen Zelle erforderlich. Für jedes Modell müssen auffindbare, geometrische Features, beispielsweise Bohrungen, Spalte, oder Bolzen, definiert werden, an Hand derer das vorliegende Modell in einer Zelle eindeutig bezüglich Art und Lage zugeordnet werden kann. Eine Pose eines Objekts im Raum hat in allgemeiner Form sechs Freiheitsgrade: drei in der Translation (Ort), drei in der Rotation (Orientierung oder Kippung). Zur Posenerkennung, auch Lagenerkennung genannt, können die Modelle in der Zelle eingelernt werden, wodurch gegebenenfalls auch Festsensoren für eine Erkennung lokaler geometrischer Features in ihrer Position oder Anzahl angepasst werden müssen. Anschließend wird für das neue Modell in jeder Zelle die Posenerkennung neu einprogrammiert und kalibriert, da die relative Pose der Sensoren durch den Aufbau in unterschiedlichen Zellen nie identisch ist.

Ein manuelles Einrichten geometrischer Features in allen Zellen entlang der Fertigungslinie kann sehr arbeits- und zeitintensiv und auch fehleranfällig durch den manuellen Vorgang sein. Zudem muss das Modell des Fahrzeugs physisch und in der richtigen Aufbaustufe vorliegen, damit die Einrichtung jeder Zelle abgeschlossen werden kann. Bei dieser Einrichtung muss die Fertigungslinie angehalten werden, so dass ein Automobilbauer durch den Stillstand wertvolle Produktionszeit einbüßt und damit den erreichbaren Ausstoß an PKWs reduziert.

Zur Lageerkennung von Objekten durch Kamera und Tiefensensoren gibt es verschiedene Verfahren, beispielsweise T. Hodan et al. "BOP Benchmark for 6D Object Pose Estimation", https://arxiv.org/abs/1808.08319. Ein Computerprogramm, das auch industriell genutzt wird, ist die 3D-Vision-Technologie der MVTec Software GmbH. Es ermöglicht eine Objekterkennung auf Basis eines Computer-Aided Design and Drafting (CAD) -Modells, siehe https://www.mvtec.com/de/services-solutions/technologien/3d-vision/3d-matching/. Dabei werden zwei Ausführungen beschrieben: (i) Surface Based Matching: Aus dem CAD-Modell wird eine 3D-Punktwolke des Objekts erzeugt und anschließend mit der 3D-Szene ausgerichtet, um eine Objektpose zu ermitteln, (ii) Shape-Based 3DMatching: Diese nutzt klassische Bildverarbeitungsmethoden in einer vordefinierten Region, um ein Matching zur Lokalisierung des Suchobjekts durch die affine Transformation zu erreichen. Die 3D-Vision-Technologie der MVTec Software GmbH basiert auf Kantenerkennung durch Bildverarbeitungsmethoden und dem Feature-Matching. Dabei ist viel Nutzerinteraktion, insbesondere beim Einrichten, erforderlich und das System funktioniert nur unter sehr beschränken Randbedingungen hinsichtlich Beleuchtungssituation, verrauschte Sensorinformation und Verdeckung.

Aufgabe der Erfindung

Es wäre daher wünschenswert, ein Verfahren und ein Posenbestimmungssystem bereitzustellen, welche die Nachteile bekannter Verfahren und Vorrichtungen zumindest weitgehend vermeiden. Insbesondere soll eine erhöhte Robustheit und erhöhte Einsatzbereitschaft bei gleichzeitiger Reduzierung von Störeinflüssen ermöglicht werden.

Allgemeine Beschreibung der Erfindung

Diese Aufgabe wird adressiert durch ein computerimplementiertes Verfahren zum Bestimmen einer Pose mindestens eines Zielobjekts in einer Szene und ein Positionsbestimmungssystem mit den Merkmalen der unabhängigen Patentansprüche. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird ein computerimplementiertes Verfahren zum Bestimmen einer Pose mindestens eines Zielobjekts in einer Szene vorgeschlagen.

Der Begriff "computerimplementiert", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess beziehen, welcher vollständig oder teilweise unter Verwendung von Datenverarbeitungsmitteln implementiert ist, insbesondere unter Verwendung mindestens eines Prozessors. Der Begriff "Computer" kann sich hier grundsätzlich auf eine Vorrichtung oder eine Kombination oder ein Netzwerk von Vorrichtungen beziehen, welche mindestens eine Datenverarbeitungseinheit, wie einen Prozessor aufweist. Der Computer kann, zusätzlich eine oder mehrere weitere Komponenten aufweisen, wie beispielsweise mindestens ein Datenspeichergerät, mindestens eine elektronische Schnittstelle oder mindestens eine Mensch-Maschine Schnittstelle.

Der Begriff "Zielobjekt", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein grundsätzlich beliebiges Objekt beziehen, dessen Pose bestimmt werden soll. Das Zielobjekt kann beispielsweise ein Automobil oder ein Teil eines Automobils sein.

Der Begriff "Szene", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf mindestens eine Umgebung und/oder räumlichen Bereich beziehen, welcher das Zielobjekt aufweist. Die Szene kann das Zielobjekt und das Zielobjekt umgebende Bereiche aufweisen. Die Szene kann eine Zelle einer Herstellungslinie sein. Die Szene kann weiter eine Aufbaustufe der Fertigungslinie sein.

Der Begriff "Pose", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Kombination von Position und Orientierung im dreidimensionalen Raum beziehen. Die Pose des Zielobjekts im Raum kann sechs Freiheitsgrade aufweisen, beispielsweise drei Translationsfreiheitsgrade und drei Rotationsfreiheitsgrade. Die Pose des Zielobjekts kann eine Information über eine Translation und eine Rotation des Zielobjekts umfassen. Die Information über die Translation und die Rotation kann sich auf ein Koordinatensystem eines, weiter unten beschriebenen, Bildsensors oder Tiefensensors beziehen. Die Translation kann als ein dreidimensionaler Punkt (X, Y, Z) in dem Koordinatensystem des Bildsensors oder Tiefensensors definiert sein. Die Translation kann durch die Ortskoordinaten X, Y und Z definiert sein. Die Rotation kann als Orientierung oder Kippung definiert werden. Die Rotation kann durch eine Winkelposition definiert sein. Die Rotation kann durch mindestens drei Winkel angegeben werden, beispielsweise Eulerwinkel oder Neigungswinkel, Rollwinkel und Gierwinkel. Die Translation und Rotation des Zielobjektes kann zusammen auch als sechsdimensionale Information oder 6D-Information bezeichnet werden. Unter "Bestimmen einer Pose" kann ein Bestimmen von Translations- und/oder Rotationsinformationen verstanden werden. Es sind Ausführungsformen denkbar in welchen das Bestimmen der Pose ein Bestimmen eines Teils der Translations- und/oder Rotationsinformationen umfasst. Beispielsweise können Freiheitsgrade durch Bedingungen vorgebeben sein und/oder Information über Translation und/oder Rotation vorbekannt sein. Beispielsweise kann ein Bestimmen der Pose ein Bestimmen von zwei Translationen (X, Y) und einer Rotation um Z umfassen.

Das Verfahren umfasst die folgenden Schritte:

a) Bereitstellen eines digitalen Trainingsdatensatzes, wobei der Trainingsdatensatz eine Mehrzahl von 3D-Simulationen mindestens einer, mit mindestens einem Sensor eines Posenbestimmungssystems aufzunehmenden, Szene, welche das Zielobjekt aufweist, und mit jeweils bekannter Pose des Zielobjekts umfasst, wobei der Sensor mindestens einen Bildsensor und/oder mindestens einen Tiefensensor aufweist;
b) Parametrisieren eines Models zur Bestimmung der Pose basierend auf dem digitalen Trainingsdatensatz, wobei das Model mindestens einen Algorithmus zum Bestimmen einer Pose des Zielobjekts aus mit dem Sensor aufgenommenen Daten der Szene umfasst;
c) Bereitstellen des parametrisierten Models an das Posenbestimmungssystem;
d) Aufnehmen von Daten der Szene mit dem Sensor;
e) Auswerten der aufgenommenen Daten der Szene, wobei das Auswerten ein Bestimmen der Pose des Zielobjekts unter Verwendung des parametrisierten Models umfasst.

Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

Der Begriff "Trainingsdatensatz", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Datensatz beziehen, welcher zum Parametrisieren eines Modells, insbesondere zu einem Trainieren eines maschinell lernenden Algorithmus, verwendet wird. Der Trainingsdatensatz kann realitätsnahe Simulationsdaten umfassen. Der Trainingsdatensatz umfasst 3D-Simulationen einer Szene mit jeweils bekannter Pose des Zielobjekts. Die 3D-Simulationen können das Zielobjekt in verschiedenen bekannten Posen, bevorzugt in allen möglichen Positionen, aufweisen. Die möglichen Positionen können durch Randbedingungen begrenzt sein. Unter "digitalen Daten" können maschinenlesbare und verarbeitbare Daten verstanden werden, insbesondere computerlesbare und verarbeitbare Daten.

Der Begriff "Bereitstellen des Trainingsdatensatzes", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Erzeugen des Trainingsdatensatzes und/oder ein Abfragen des Trainingsdatensatzes beziehen. Das Erzeugen des Datensatzes kann die einfache virtuelle Anordnung der späteren Objekte und der simulierten Datenaufnahme eines Sensors, beispielsweise eines Tiefensensors oder Bildsensors umfassen oder auch ein fotorealistisches Rendering aller Details umfassen. Bei der Erzeugung des Datensatzes können auch Einflussfaktoren simuliert werden, die die Posenbestimmung in realer Umgebung erschweren. Diese Einflussfaktoren können umgebungsbedingt sein, beispielsweise Licht, Abschattung, Sichtbarkeit, und/oder aus dem genutzten Sensor selbst entstammen, wie beispielsweise Auflösung, Farbtreue, Rauschen. Das Bereitstellen kann ein berücksichtigen von anwendungsspezifischen Einflussfaktoren umfassen. Beispielsweise kann in digitaler Form eine komplette Umgebung der Fertigungslinie integriert werden, um maximale Anpassung und Auslegung der Parameter im trainierten/ gelernten Modell zu bestimmen. So können umgebungsspezifische Einflussfaktoren bereits in der Vorbereitung des Systems berücksichtigt werden und damit deren Einfluss auf die Leistungsfähigkeit des Systems minimiert oder eliminiert werden. Das Verfahren kann ein Simulationsverfahren umfassen, in welchem die Trainingsdaten mit den realen Einflussfaktoren automatisiert synthetisch erzeugt werden. Das Abfragen des Trainingsdatensatzes kann beispielsweise mindestens einen Datentransfer umfassen, beispielsweise ein Herunterladen des Trainingsdatensatzes von einem Server.

Der Begriff "Simulieren" und der Vorgang der "Simulation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess eines Nachbildens einer realen Szene beziehen, insbesondere einer Szene in der Wirklichkeit.

Der Begriff "Simulation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine virtuelle Nachbildung der realen Szene beziehen. Der Begriff "3D-Simulation", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine virtuelle, auch als synthetisch bezeichnet, dreidimensionale Nachbildung der realen Szene beziehen. Die 3D-Simulationen können jeweils eine virtuelle dreidimensionale Nachbildung der realen Szene umfassen. Ein Ergebnis des Simulationsprozesses wird im Rahmen der vorliegenden Erfindung simulierte Szene genannt. Die simulierte Szene umfasst ein simuliertes Zielobjekt mit bekannter Pose. Die 3D-Simulationen können unter Anwendung mindestens eines Simulationstools erzeugt werden, wie beispielsweise eines Algorithmus und/oder eines Neuronalen Netzwerks. Das Verfahren kann mindestens einen Simulationsschritt aufweisen. In dem Simulationsschritt können die 3D-Simulationen erzeugt werden. Der Algorithmus zur Posenbestimmung kann mit Hilfe von, insbesondere realitätsnahen, Simulationsdaten parametrisiert werden.

Bei der Erzeugung der 3D-Simulationen kann ein digitales Modell des Zielobjekts verwendet werden, insbesondere ein Computer-Aided Design und Drafting (CAD) -Modell des Zielobjekts, auch als CAD-Daten des Zielobjekts bezeichnet. Das digitale Modell kann eine virtuelle Definition des realen Zielobjekts, insbesondere mit oder ohne Beschreibung weiterer Charakteristika wie Farbe, Textur oder Oberflächenbeschaffenheit, umfassen.

Wie oben ausgeführt, wird in dem Verfahren mindestens ein Sensor eines Posenbestimmungssystems verwendet. Bei der Erzeugung der 3D-Simulationen kann ein digitales Modell des Sensors verwendet werden. Das Erzeugen der 3D-Simulationen kann insbesondere ein Berücksichtigen einer Ausrichtung des Sensors umfassen. Das Verfahren kann ein Verwenden von Referenzobjekten oder Kalibrierobjekten in der Szene aufweisen, welche erkennen lassen, falls sich eine Ausrichtung des Bild- oder des Tiefensensors oder eines weiteren Sensors im Verlauf oder im Betrieb verändert.

Die 3D-Simulationen können jeweils eine dreidimensionale, virtuelle Darstellung der Szene aus mindestens einer Position des Sensors, bevorzugt aus verschiedenen Positionen des Sensors, umfassen. Das Erzeugen der 3D-Simulationen kann ein Rendering umfassen. Der Begriff "Rendering", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen automatischen Prozess zur Erzeugung eines photorealistischen oder nicht-photorealistischen Bildes von einem 2D- oder 3D-Model beziehen. Die 3D-Simulationen können realistische 3D-Simulationen umfassen, beispielsweise auf Basis von Virtual Reality Umgebungen. Derartige 3D-Simulationen sind beispielsweise aus dem technischen Gebiet des Gaming bekannt, siehe beispielsweise Unity oder Unreal Engine. Das Generieren der 3D-Simulationen kann mit und/oder unter Verwendung von Modellen realer Umgebungsobjekte und/oder mit Bildern aus typischen Einsatzumgebungen erfolgen. Das Generieren der 3D-Simulationen kann mit und/oder unter Verwendung von bekannten Objekten ähnlicher Beschaffenheit wie das Zielobjekt erfolgen, beispielsweise ähnlicher Farbe und/oder ähnlicher Form und/oder ähnlicher Textur und/oder Glanz und/oder weiterer ähnlicher Beschaffenheiten. Das Bereitstellen des Trainingsdatensatzes, insbesondere das Generieren der 3D-Simulationen, kann eine Simulation unter einem Einflussparameter umfassen, beispielsweise unter Variation des Einflussparameters. Der Einflussparameter kann ein Parameter sein ausgewählt aus der Gruppe bestehend aus: Beleuchtung, Abschattung, Orientierung, Textur, Glanz, Störkonturen, Objektfarbe, Objektzustand, Unschärfen, Sensorrauschen. Die 3D-Simulationen können beispielsweise dreidimensionale, virtuelle Darstellungen mit Teilabschattungen des Zielobjekts von einer Perspektive des Sensors aus umfassen. Die 3D-Simulationen können beispielsweise dreidimensionale, virtuelle Darstellungen mit unterschiedlichen Beleuchtungsverhältnissen umfassen. Die 3D-Simulationen können beispielsweise dreidimensionale, virtuelle Darstellungen mit verschiedenen Unschärfen umfassen.

Insbesondere zu einer Reduzierung von Rechenzeit und Rechenaufwand kann das Verfahren einen Vorverarbeitungsschritt aufweisen. In dem Vorverarbeitungsschritt kann eine CAD-Vorverarbeitung erfolgen, wobei die Vorverarbeitung eine Reduktion der CAD-Daten auf einen äußeren sichtbaren Anteil, beispielsweise eine umschließende Hülle, umfasst. So kann eine Bearbeitungszeit in der Vorbereitung und im laufenden Betrieb verkürzt werden.

Das Erzeugen des Trainingsdatensatzes kann automatisch und/oder automatisiert und/oder manuell erfolgen. Beispielsweise kann ein CAD-Modell eingegeben und/oder geladen und/oder ausgewählt werden und in Verfahrensschritt b) oder in einem zusätzlichen Simulationsschritt die Mehrzahl von 3D-Simulationen erzeugt werden. Die Mehrzahl von Trainingsdatensätze kann hunderte Trainingsdatensätze, insbesondere für das Trainieren maschinell lernender Algorithmen bevorzugt mehrere tausend Trainingsdatensätze, umfassen.

In dem Verfahren kann eine Mehrzahl von Sensoren und/oder weiteren Sensoren verwendet werden. Beispielsweise können mehrere synchrone Kameras verwendet werden. Beispielsweise kann eine Kombination aus Bildkamera und Tiefensensor verwendet werden. Das Generieren der 3D-Simulationen kann jeweils mit und/oder unter Verwendung von einem digitalen Modell der Sensoren erfolgen.

Der Begriff "Bildsensor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen optischen Sensor beziehen, welcher eingerichtet ist mindestens eine Abbildung eines beliebigen Objekts zu erzeugen und/oder aufzunehmen. Der Bildsensor kann mindestens eine Kamera aufweisen. Der Bildsensor kann mindestens einen Kamerasensor aufweisen, insbesondere einen pixelierten Kamerasensor. Beispielsweise kann der Bildsensor ein zweidimensionaler oder ein dreidimensionaler Bildsensor sein. Der Bildsensor kann eine RGB-Kamera sein und/oder umfassen. Der Bildsensor kann eingerichtet sein mindestens ein RGB-Bild und/oder ein Graustufenbild zu erzeugen und/oder aufzunehmen. Auch andere Ausgestaltungen sind denkbar. Beispielsweise kann der Bildsensor eingerichtet sein ein Bild der Szene im infraroten, im visuellen oder im ultravioletten Spektralbereich zu erzeugen und/oder aufzunehmen. Der Begriff "visueller Spektralbereich" umfasst grundsätzlich einen Bereich von 380 nm bis 780 nm. Der Begriff "infraroter" (IR) Spektralbereich umfasst grundsätzlich einen Bereich von 780 nm bis 1000 $\mu$m, wobei der Bereich von 780 nm bis 1.4 $\mu$m als nahes Infrarot (NIR), und der Bereich von 15 $\mu$m bis 1000 $\mu$m als fernes Infrarot (FIR) bezeichnet wird. Der Begriff "ultravioletter" (UV) Spektralbereich umfasst grundsätzlich einen Spektralbereich von 100 nm bis 380 nm.

Der Bildsensor kann eingerichtet sein ein Bild, auch als Bilddaten bezeichnet, der Szene aufzunehmen. Der Begriff "Bild", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine zweidimensionale oder dreidimensionale Abbildung beziehen. Bei Verwendung eines dreidimensional abbildenden Bildsensors kann das Bild eine dreidimensionale Abbildung der Szene, insbesondere des Zielobjekts, sein.

Der Begriff "Tiefensensor", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Sensor beziehen, welcher eingerichtet ist einen Abstand zwischen einem Objekt und dem Sensor zu bestimmen. Der Tiefensensor kann eingerichtet sein eine 3D-Information der Szene, insbesondere des Zielobjekts, zu bestimmen. Der Tiefensensor kann ein bildbasierter Tiefensensoren oder ein nicht-bildbasierter Tiefensensor sein. Der Tiefensensor kann mindestens eine Tiefenkamera sein und/oder aufweisen, wie beispielsweise eine Flugzeit-(ToF) Kamera und/oder eine Muster-Projektions-Kamera. Der Tiefensensor kann mindestens eine Stereokamera sein und/oder aufweisen. Der Tiefensensor kann mindestens ein 2D- oder 3D-Sensor sein und/oder kann mindestens einen 2D- oder 3D-Sensor aufweisen, welcher auf dem LIDAR ("light detection and ranging")-Messprinzip, auch LADAR (laser detection and ranging) genannt, basiert. Die Tiefeninformation, welche durch den Sensor gewonnen wird, kann zusammen mit einer zweidimensionalen Abbildung der Szene von dem Bildsensor zu einer 3D-Information der Szene fusioniert werden. Der Sensor kann einen 3D-Bildsensor aufweisen und/oder der Sensor kann einen 2D-Bildsensor und einen weiteren Sensor zur Bestimmung einer Tiefeninformation aufweisen. Die Verwendung von 3D-Information, insbesondere der Tiefeninformation, der Szene kann einen robusteren und zuverlässigeren Betrieb des Posenbestimmungssystems erlauben.

Die aufgenommenen Daten der Szene können von dem Sensor aufgenommene Bilddaten und/oder die Tiefeninformation der Szene umfassen.

Das Posenbestimmungssystem kann weiter zusätzliche Sensoren zur Überwachung der Zelle, insbesondere eines Raums, einer Fertigungslinie aufweisen.

Der Begriff "Posenbestimmungssystem", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, welche eingerichtet ist eine Pose mindestens eines Objekts im Raum zu bestimmen.

Das Model umfasst mindestens einen Algorithmus zum Bestimmen einer Pose des Zielobjekts aus einem mit dem Sensor aufgenommenen Daten der Szene.

Das Model zum Bestimmen einer Pose des Zielobjekts aus den aufgenommenen Daten der Szene kann mindestens einen Algorithmus zum Erkennen und zum Selektieren des Zielobjekts aus den aufgenommenen Daten, insbesondere aus den Bildaten, umfassen.

Beispielsweise kann der Algorithmus zum Bestimmen einer Pose eine Bildanalyse und/oder eine Bildverarbeitung umfassen. Die Bildanalyse und/oder die Bildverarbeitung können ein Auswählen eines interessierenden Bereichs (ROI) umfassen. Die Bildanalyse und/oder die Bildverarbeitung kann eine Punkt-, Kanten- oder Flächenerkennung umfassen, welche mittels Deskriptoren beschrieben werden. Beispielsweise kann der Algorithmus zum Bestimmen einer Pose ein sogenanntes Cropping umfassen. Der Begriff "Cropping", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Ausschneiden eines interessierenden Bereichs oder ein Beschneiden des Bildes auf den interessierenden Bereich beziehen. Die Bildanalyse und/oder die Bildverarbeitung können ein Anwenden mindestens eines Filters und/oder mindestens eine Transformation umfassen auch unter Zuhilfenahme lokaler Muster oder Kennzeichen zur Extraktion und zum Auffinden charakteristischer Punkte, Kanten oder Flächen.

Beispielsweise kann der Algorithmus zum Bestimmen einer Pose eine Segmentierung umfassen. Die Segmentierung kann ein Erstellen eines binär-Bildes umfassen, wobei das binär-Bild angibt, welche Pixel zum Zielobjekt und welche zum Hintergrund gehören. Der Begriff "Segment", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Teil eines Bildes und/oder eines Bereichs des Bildes beziehen. Das Segment kann eine Anzahl von Bildpixeln umfassen. Der Begriff "Segmentierung", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Prozess einer Aufteilung des Bildes in eine Mehrzahl von Segmenten beziehen. Die Segmentierung kann ein Zuordnen mindestens einer Kennzeichnung zu jedem Bildpixel umfassen, so dass Bildpixel mit gleichen Charakteristiken, die gleiche Kennzeichnung aufweisen. Die Segmentierung kann eine sogenannte Semantic segmentation umfassen. Die Segmentierung kann eine binäre Segmentierung sein. Die binäre Segmentierung kann ein Kennzeichnen der Bildpixel als "Zielobjekt" und "Hintergrund". Alle Nicht-Zielobjekt Bildpixel können als "Hintergrund" angesehen werden. Neben der Segmentierung kann ein Objekt auch als Ganzes erkannt werden, wobei als Ergebnis kein binäres Bild ausgegeben wird, sondern ein Bildausschnitt, eine sogenannte Bounding Box, in dem sich das Objekt befindet. Diese Art der Objekterkennung erfolgt oft als separater, maschinell lernender Algorithmus häufig implementiert mittels Convolutional Neural Networks.

Die Bildanalyse und/oder die Bildverarbeitung kann eine Merkmalextraktion umfassen. Beispielsweise kann die Merkmalextraktion unter Verwendung eines Convolutional Neural Network (CNN) erfolgen. Mittels Filter können aus einem Bild lokale Muster oder Kennzeichen extrahiert werden. Diese Kennzeichen können 0-, 1- oder 2-dimensional sein, also charakteristische Punkte, Kanten oder Flächen beschreiben. Einzelne oder die Kombination solcher Merkmale mit räumlicher Verteilung können ein Objekt auch sehr genau beschreiben und zum Auffinden dienlich sein.

Der Algorithmus zum Bestimmen einer Pose des Zielobjekts aus den aufgenommenen Daten der Szene kann mindestens einen Posenbestimmungsalgorithmus, insbesondere einen 6D-Posenbestimmungsalgorithmus, aufweisen. Der Posenbestimmungsalgorithmus kann mindestens einen Freiheitsgrad bestimmen, wobei die Freiheitsgrade Translation und/oder Rotation und/oder zeitabhängige Komponenten davon umfassen. Die extrahierten Merkmale können als Input für eine Posenbestimmung verwendet werden. Verfahren zum Bestimmen einer Pose eines Zielobjekts unter Verwendung von Merkmalen sind dem Fachmann grundsätzlich bekannt. Beispielsweise kann die Posenbestimmung wie in G. Pavlako et al. "6-DoF Object Pose from Semantic Keypoints", arXiv:1703.04670 beschrieben ausgestaltet sein. Weitere aktuelle Verfahren sind beispielsweise in T. Hodan et al. "BOP: Benchmark for 6D Object Pose Estimation", arXiv:1808.08319 beschrieben.

Beispielsweise kann der Algorithmus zum Bestimmen der Pose auf Basis eines maschinell lernenden Algorithmus ausgestaltet sein, wie in C. Wang et al. "DenseFusion: 6D Object Pose Estimation by Iterative Dense Fusion", arXiv:1901.04780, oder in Bugra Tekin, Sudipta N Sinha, and Pascal Fua, "Real-time seamless single shot 6d object pose prediction", Proceedings of the IEEE Conference on Computer Vision and Pattern Recognition, Seiten 292-301, 2018.

Alternativ oder zusätzlich, kann der Algorithmus auch ein nicht-lernender Algorithmus sein, welcher zum Beispiel als Merkmale charakteristische Punkte oder Kanten aus den Bildern extrahiert, siehe M. Imperoli and A. Pretto, "D2CO: Fast and robust registration of texture less objects using the Directional Chamfer Distance", Proc. of 10. International Conference on Computer Vision Systems (ICVS 2015), Seiten 316-328, 2015, oder wie in C. Choi und H. Christensen "3d texture less object detection and tracking: An edge based approach", Intelligent Robots and Systems (IROS), 2012 IEEE/RSJ International Conference, Seiten 3877-3884. IEEE, 2012, beschrieben.

Der Algorithmus zum Bestimmen einer Pose kann einen mehrstufigen Algorithmus umfassen. Beispielsweise kann in einer ersten Stufe eine grobe Posenbestimmung und in einer zweiten Stufe eine feine Posenbestimmung erfolgen. Ein Ergebnis der grobe Posenbestimmung kann als Input für die feine Posenbestimmung verwendet werden. Verfahren zum Bestimmen einer Pose eines Zielobjekts unter Verwendung eines mehrstufigen oder iterativen Algorithmus sind dem Fachmann grundsätzlich bekannt. Beispielsweise kann der mehrstufige Algorithmus wie in C. Choi und H. Christensen "3d texture less object detection and tracking: An edge based approach", Intelligent Robots and Systems (IROS), 2012 IEEE/RSJ International Conference, Seiten 3877-3884. IEEE, 2012 oder in M. Imperoli and A. Pretto, "D2CO: Fast and robust registration of texture less objects using the Directional Chamfer Distance", Proc. of 10. International Conference on Computer Vision Systems (ICVS 2015), Seiten 316-328, 2015, beschrieben, ausgestaltet sein. Die Unterschritte in posenbestimmenden Algorithmen umfassen kann auch die Isolierung des Zielobjekts, gefolgt von der eigentlichen Posenbestimmung lediglich auf dem Teilbild des Objekts, umfassen.

Der Algorithmus zum Bestimmen einer Pose kann eingerichtet sein die Bestimmung der Pose über einen zeitlichen Ablauf und/ oder aus unterschiedlichen Perspektiven zu fusionieren, beispielsweise mit Multiview-Ansätzen oder sogenannter Graphoptimierung unter zu Hilfenahme von Bewegungsdaten oder gegebenen Perspektiven.

Der Begriff "Model", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Beschreibung des Zielobj ekts und der Pose beziehen, welches in den von dem Sensor aufgenommenen Daten erkannt werden soll. Das Model kann ein Model sein basierend auf einem maschinell lernenden Algorithmus. Das parametrierte Model kann ein trainiertes Model, insbesondere ein Parametersatz sein und/oder umfassen. Alternativ oder zusätzlich, kann das Model auf einem nicht-maschinell lernenden Algorithmus, auch als klassischer Algorithmus bezeichnet, basieren. Das Model kann je nach Implementierung unterschiedlich sein. Das Model kann beispielsweise Linien, und/oder Konturen, und/oder Flächen, und/oder eine Auswahl von physischen Punkten am Objekt, und/oder einen Farbverlauf, und/oder einen Farbgradienten beschreiben. Der Begriff "Parametrisieren" kann ein Bestimmen von Parametern des Models verstanden werden. Der Begriff "Parametrisieren" kann bei einem Model basierend auf einem maschinell lernenden Algorithmus als ein Trainieren des Models verstanden werden. Das parametrisierte Model kann aus dem maschinellen Lernen erzeugt werden oder aus einer automatisierten Analyse der Bilddaten und/oder Tiefeninformation, auch als Tiefenbilddaten bezeichnet.

Insbesondere für bekannte Vorausrichtung der Pose des Zielobjekts, können klassische Algorithmen, wie beispielsweise klassische Bildverarbeitungsalgorithmen, verwendet werden. Beispielsweise kann eine genaue Poseninformation durch Vergleich mit einer parallellaufenden Simulation, beispielsweise Rendering, optimiert werden. Robuste Ausführungen dieser Algorithmen können typischerweise charakteristische Kanten, Umrisse und/ oder geometrische Kennzeichen am Zielobjekt ermitteln. Beispielsweise kann der klassische Bildverarbeitungsalgorithmus auf punktbasiertem Abgleich, wie beispielsweise Iterative closest point (ICP), perspective-n-point (PnP), Region-based Gauss-Newton Approach, Random sample consensus (RANSAC) basieren, oder zusätzlich Informationen der Pose zu einem vorausgehenden Zeitpunkt und einer angenommenen, relativen Bewegung, (extended) Kalman Filter (EKF), nutzen.

Das Model kann auf einem maschinell lernenden Algorithmus basieren. Der Begriff "maschinelles Lernen", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Verfahren unter Verwendung von Künstlicher Intelligenz (AI) beziehen, zum automatischen Erzeugen eines Models. Der Begriff "maschinell lernender Algorithmus", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf einen Algorithmus beziehen, welcher eingerichtet ist ein Model basierend auf dem Trainingsdatensatz zu erzeugen. Der maschinell lernende Algorithmus kann ein selbstadaptiver Algorithmus sein. Der maschinell lernende Algorithmus kann ein künstliches neuronales Netz nutzen und/oder umfassen. Das künstliche neuronale Netz kann mindestens ein Element aufweisen ausgewählt aus der Gruppe bestehend aus: hierarchischen Entscheidungsbäumen, Hough forest, regression forest, Convolutional Neural Network, Residual Neural Network, Pixel-wise Voting, Pixel-wise Fusion Network, deep learning.

Unter "Trainieren" kann ein Lernen und/oder ein Erzeugen des trainierten Models basierend auf dem Trainingsdatensatz verstanden werden. Das Trainieren kann ein Anpassen von Modellparametern und/oder eines verwendeten Algorithmus, beispielsweise zum Segmentieren, umfassen. Beispielsweise kann eine Segmentierung alleine auf Basis von Farbinformationen erfolgen, beispielsweise unter Verwendung von Farbfiltern. Als Parameter kann ein Farbton und/oder ein Farbbereich definiert werden. Beispielsweise können verschiedenste Kombinationen aus Merkmalen genutzt werden um das Objekt zuverlässig zu identifizieren. Diese Vielzahl an Dimensionen kann mittels maschinell lernenden Algorithmen auf einfache Art bewältig werden. Dabei muss der zu trainierende Algorithmus oder das zu trainierende Modell eine Vielzahl von Variationen und Ansichten in der Trainingsphase analysieren, um anschließend in der realen Szene die Aufgabe zu bewältigen. Das Trainieren kann ein Lösen eines Optimierungsproblems, insbesondere eines Minimierungsproblems, umfassen. Das Trainieren kann ein Minimieren einer Abweichung $\Delta P$ einer, mit dem maschinell lernenden Algorithmus bestimmten Pose und einer wirklichen, bekannten Pose des Zielobjekts umfassen. Beispielsweise das Trainieren ein Lösen des folgenden Minimierungsproblems umfassen:

$$\Delta P = \frac{1}{M} \sum_{j} \min \left\| \left( R x_j + t \right) - \left( \widehat{R_i} x_j + t_i \right) \right\|$$

wobei $x_j$ ist der j. Punkt von M ausgewählten 3D-Punkten des simulierten Zielobjekts ist, p= [R|t] die wirkliche Pose und

$\hat{p} = [\widehat{R_i}|\widehat{t_i}]$ die mit dem maschinell lernenden Algorithmus bestimmte Pose, siehe auch C. Wang et al. "DenseFusion: 6D Object Pose Estimation by Iterative Dense Fusion", arXiv: 1901.04780.

Schritt b) kann einen Testschritt aufweisen. In dem Testschritt kann ein Testdatensatz von Bildern und/oder Tiefeninformationen der Szene mit bekannter Pose des Zielobjekts verwendet werden. Die Bilder und/oder Tiefeninformationen der Szene können dabei 3D-Simulationen sein. Beispielsweise kann der Testdatensatz ein Teil des gesamten Datensatzes sein, welcher nicht zum Parametrisieren des Models, insbesondere nicht zum Training des maschinell lernenden Algorithmus, verwendet wird. Alternativ oder zusätzlich kann der Testdatensatz reale, gemessene Bilder und/oder Tiefeninformation mit bekannter Position des Zielobjekts umfassen. Der Testschritt kann ein Bestimmen der Pose des Zielobjekts unter Verwendung des parametrisierten Models aus den Bildern und/oder der Tiefeninformation des Testdatensatzes erfolgen. In dem Testschritt kann eine Abweichung von der bestimmten Pose und der bekannten Pose des Zielobjekts bestimmt werden.

Schritt b) kann in mindestens einer Trainingseinheit des Posenbestimmungssystems ausgeführt werden. Der Begriff "Trainingseinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine Vorrichtung beziehen, welche mindestens eine Prozessoreinheit, wie einen Prozessor, Mikroprozessor, oder ein Computer System, aufweist, welche eingerichtet ist für das automatisierte Erstellen eines Modells. Die Trainingseinheit kann eingerichtet sein, um den maschinell lernenden Algorithmus auszuführen. Schritt b) kann vollautomatisch erfolgen. Die Trainingseinheit kann selbständig und unbeaufsichtigt arbeiten.

Der Trainingsdatensatz kann eine große Anzahl von 3D-Simulationen aufweisen. Für gute und stabile Ergebnisse des trainierten, maschinell lernenden Algorithmus kann eine sehr große Anzahl an 3D-Simulationen mit genauer Kenntnis der Pose des Zielobjekts verwendet werden, beispielsweise mehrere tausend, um ein sogenanntes Overfitting zu vermeiden. Diese große Anzahl kann nicht praktikabel von Hand in realer Umgebung erstellt werden. Erfindungsgemäß wird deshalb vorgeschlagen, automatisiert synthetische Daten herzustellen, die genau so gute Ergebnisse nach dem Training erlauben. Bei diesem Verfahren kann auch die tatsächliche Pose für den Trainingsdatensatz sehr einfach automatisiert erstellt werden. Darüber hinaus kann der Datensatz mit einer Mehrzahl von realen oder potenziellen Einflussfaktoren angereichert werden. So kann das parametrisierte Modell ein viel breiteres Spektrum an Variationen nutzen, als real und praktisch umsetzbar und handhabbar wäre.

Schritt b) kann wiederholt durchgeführt werden. Beispielsweise kann ein automatischer Start von Schritt b) bei Eingabe eines neuen CAD-Modells erfolgen. Beispielsweise kann bei einer Wiederholung eine Erweiterung des parametrisierten Models erfolgen.

Der Algorithmus kann eingerichtet sein, um eine reale Sensorinformation, also das Bild des Bildsensors und die Tiefeninformation, zu interpretieren und Translation und Rotation des Zielobjekts in der realen Welt zu berechnen.

Das Posenbestimmungsystem kann eingerichtet sein, um für bekannte Vorausrichtung der Pose des Zielobjekts klassische Bildverarbeitungsalgorithmen zu nutzen. Beispielsweise kann eine genaue Poseninformation durch Vergleich mit einer parallellaufenden Simulation, beispielsweise Rendering, optimiert werden. Robuste Ausführungen dieser Algorithmen können typischerweise charakteristische Kanten, Umrisse und/ oder geometrische Kennzeichen am Zielobjekt ermitteln. Beispielsweise kann der klassische Bildverarbeitungsalgorithmus auf punktbasiertem Abgleich, wie beispielsweise Iterative closest point (ICP), perspective-n-point (PnP) basieren, Region-based Gauss-Newton Approach, Random sample consensus (RANSAC) oder zusätzlich Informationen der Pose zu einem vorausgehenden Zeitpunkt und einer angenommenen, relativen Bewegung, (extended) Kalman Filter (EKF), nutzen.

Das Verfahren umfasst ein Bereitstellen des parametrisierten Models an das Posenbestimmungssystem. Beispielsweise kann das parametrisierte Model von der Trainingseinheit über eine Schnittstelle zu einer weiteren Einheit des Posenbestimmungssystem, beispielsweise einer Auswerteeinheit, übermittelt werden.

Der Begriff "Schnittstelle", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf ein Element oder Teil des Posenbestimmungssystems beziehen, welches eingerichtet ist Informationen zu übertragen. Die Schnittstelle kann eine Kommunikationsschnittstelle, insbesondere eine Datenschnittstelle sein, welche eingerichtet ist Daten von einer anderen Vorrichtung und/oder von einem Benutzer zu empfangen und/oder Daten von der Schnittstelle an weitere Komponenten der Posenbestimmungssystems und/oder an externe Vorrichtungen zu übermitteln. Die Schnittstelle kann mindestens eine elektronische Schnittstelle und/oder eine Mensch-Maschine-Schnittstelle aufweisen, wie beispielsweise eine Eingabe-/Ausgabe-Vorrichtung wie ein Display und/oder eine Tastatur. Die Schnittstelle kann mindestens eine Datenverbindung aufweisen, beispielweise eine Bluetooth-Verbindung, eine NFC-Verbindung oder eine andere Verbindung. Die Schnittstelle kann mindestens ein Netzwerk aufweisen oder Teil eines Netzwerkes sein. Die Schnittstelle kann mindestens einen Internet-Port, mindestens einen USB-Port, mindestens ein Laufwerk oder ein Webinterface aufweisen.

Die Auswerteeinheit kann mindestens eine Datenverarbeitungseinheit umfassen, beispielsweise mindestens einen Computer oder Mikrocontroller. Die Datenverarbeitungseinheit kann einen oder mehrere flüchtige und/oder nichtflüchtige Datenspeicher aufweisen, wobei die Datenverarbeitungseinheit beispielsweise programmtechnisch eingerichtet sein kann, um das Bild der Szene auszuwerten. Die Auswerteeinheit kann weiterhin mindestens eine Schnittstelle umfassen, beispielsweise eine elektronische Schnittstelle und/oder eine Mensch-Maschine-Schnittstelle wie beispielsweise eine Eingabe-/Ausgabe-Vorrichtung wie ein Display und/oder eine Tastatur. Der Begriff "Datenverarbeitungseinheit", wie er hier verwendet wird, ist ein weiter Begriff, dem seine gewöhnliche und gängige Bedeutung beigemessen werden soll, wie der Fachmann sie versteht. Der Begriff ist nicht beschränkt auf eine spezielle oder angepasste Bedeutung. Der Begriff kann, ohne Beschränkung, sich insbesondere auf eine beliebige Logikschaltung, zum Ausführen grundlegender Operationen eines Computers oder Systems, beziehen und/oder allgemein auf eine Vorrichtung, welche zum Ausführen von Berechnungen oder logischen Operationen eingerichtet ist. Die Datenverarbeitungseinheit kann einen Prozessor oder eine Prozessoreinheit aufweisen. Die Datenverarbeitungseinheit kann beispielsweise eine arithmetisch-logische Einheit (ALU), eine Gleitkommaeinheit (FPU), wie einen mathematischen Koprozessor oder numerischen Koprozessor, eine Mehrzahl von Registern, und einen Arbeitsspeicher, beispielsweise einen Cache Arbeitsspeicher aufweisen. Die Datenverarbeitungseinheit kann einen Multi-Core-Prozessor aufweisen. Die Datenverarbeitungseinheit kann eine Zentrale Verarbeitungseinheit (CPU) aufweisen. Alternativ oder zusätzlich kann die Datenverarbeitungseinheit eine oder mehrere anwendungsspezifische integrierte Schaltungen und/oder eine oder mehrere Field Programmable Gate Arrays (FPGAs) oder ähnliches aufweisen.

Das Verfahren umfasst ein Aufnehmen von Daten, insbesondere mindestens eines Bildes, der Szene mit dem Sensor. Das Verfahren umfasst ein Auswerten der aufgenommenen Daten der Szene, wobei das Auswerten ein Bestimmen der Pose des Zielobjekts unter Verwendung des parametrisierten Modells umfasst. Das vorgeschlagene Verfahren basiert auf einer Pipeline mit einem parametrisierten Model und realitätsnaher 3d-Simulation der Umgebung und ist klassischen Bildverarbeitungsmethoden weit überlegen in Bezug auf Robustheit und Einsatzbereitschaft für hochautomatisierte Prozesse mit Störeinflüssen. Eine Übertragbarkeit auf neue Zielobjekte oder Modelle oder andere Anwendungsfelder ist möglich.

Für bewegte Zielobjekte kann das Aufnehmen der Daten eine zeittreue Aufnahme von Bildern und/oder Tiefeninformation umfassen, um die Posen zu einem bestimmten Zeitpunkt zu bestimmen. Für Ausführungsbeispiele in welchen das Posenbestimmungssystem aus mehreren Systemen, insbesondere mehreren Sensoren, besteht, so kann das Aufnehmen ein gleichzeitiges oder zeitsynchrones Aufnehmen mit allen Sensoren umfassen. Es kann nicht nur das Zielobjekt bewegt sein, sondern auch das Sensorsystem selbst, beispielsweise, weil es auf einem bewegten Roboter oder mobilen Roboter befestigt ist. In beiden Fällen kann eine Relativbewegung des Sensors zum Zielobjekt detektiert und damit eine zeitabhängige Posenbestimmung vorgenommen werden.

In einem weiteren Aspekt wird eine Verwendung des erfindungsgemäßen Verfahrens zum Bestimmen einer Pose vorgeschlagen. Das erfindungsgemäße Verfahren kann verwendet werden zu einem oder mehreren von: Einrichten einer Fertigungslinie oder Fertigungsinsel, Nachführen eines Roboterarms oder beliebiger Aktuatorik, Steuerung eines Roboters oder beliebiger Aktuatorik, Manipulation des Zielobjekts durch Fixierung, Kleben, Schrauben, Nieten oder ähnlichem, Vermessung des Zielobjekts, Inspektion des Zielobjekts, Zusammenbau des Zielobjekts.

Beispielsweise kann die bestimmte Pose zur synchronen Nachführung eines Roboterarms, für verschiedene Interaktion oder Manipulation eines Roboters mit oder an dem Zielobjekt, zur Ansteuerung eines Roboters, linearer Achsen, Fahrtisch, Förderband, Greifer, oder ähnlichen, zur Messung, zur Inspektion, zum Zusammenbau, und zur Lackierung verwendet werden.

Zur Implementierung derartiger Verwendungen kann das Posenbestimmungssystem mindestens eine maschinell lesbare Ausgabeeinheit aufweisen, beispielsweise zur Ankopplung einer Robotersteuerung oder Robotersynchronisierung.

Die Bestimmung der Pose des Zielobjekts in der Zelle kann durch die Simulation bereits soweit digital vorbereitet werden, dass das eigentliche Einrichten einer Zelle einer Fertigungslinie vor Ort einem Software-Update gleichkommt. Dazu kann die Vorbereitung für die Einrichtung ausschließlich auf virtuellen Daten des neuen oder zu integrierenden Zielobjekts erfolgen, also einem CAD-Datensatz, der für eine umfangreiche Datenverarbeitung zur Verfügung gestellt wird. Dabei kann mit Hilfe des CAD-Modells die Posenbestimmung automatisiert und eigenständig trainiert werden, insbesondere ohne weitere Interaktion eines Nutzers. Die Arbeitszeit kann sich so auf einen Bruchteil beschränken, weil lediglich ein neues CAD-Modell in die Software eingeladen werden muss. Fehler durch menschliche Einflüsse können vermieden werden, da die Lösung komplett automatisiert arbeitet und anschließend als parametrisiertes Modell auf alle Zellen gleichermaßen ausgerollt werden kann. Im Anwendungsfeld Automotive müsste für die vereinfachte Einrichtung der Fertigungslinie ein Fahrzeugmodell nicht mehr physisch und in den unterschiedlichen Aufbaustufen entlang der Linie vorliegen. Gleichwohl können Tests zur Verifizierung auch an den realen Karosserien vor dem Hochlaufen der Fertigungslinie durchgeführt werden. Eine Stillstandszeit der Fertigungslinie kann auf ein zeitliches Minimum reduziert werden oder sogar entfallen, und das Update der Zellen per Software "on the fly" erfolgen.

Ferner wird im Rahmen der vorliegenden Erfindung ein Computerprogramm vorgeschlagen, das bei Ablauf auf einem Computer oder einem Computer-Netzwerk das erfindungsgemäße Verfahren um Bestimmen einer Pose mindestens eines Zielobjekts in einer seiner Ausgestaltungen ausführt.

Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder einem Computer-Netzwerk ausgeführt wird. Insbesondere können die Programmcode-Mittel auf einem computerlesbaren Datenträger und/oder einem computerlesbaren Speichermedium gespeichert sein.

Der Begriffe "computerlesbarer Datenträger" und "computerlesbares Speichermedium", wie sie hier verwendet werden, können sich insbesondere auf nicht-transitorische Datenspeicher beziehen, beispielsweise ein Hardware-Datenspeichermedium, auf welchem computer-ausführbare Instruktionen gespeichert sind. Der computerlesbare Datenträger oder das computerlesbare Speichermedium können insbesondere ein Speichermedium wie ein Random-Access Memory (RAM) und/oder ein Read-Only Memory (ROM) sein oder umfassen. Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann.

Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder einem Computer-Netzwerk ausgeführt wird.

Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden.

Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Im Hinblick auf die computer-implementierten Aspekte der Erfindung können einer, mehrere oder sogar alle Verfahrensschritte des Verfahrens gemäß einer oder mehreren der hier vorgeschlagenen Ausgestaltungen mittels eines Computers oder Computer-Netzwerks durchgeführt werden. Somit können, allgemein, jegliche der Verfahrensschritte, einschließlich der Bereitstellung und/oder Manipulation von Daten mittels eines Computers oder Computer-Netzwerks durchgeführt werden.

In einem weiteren Aspekt wird ein Posenbestimmungssystem vorgeschlagen. Das Posenbestimmungssystem umfasst:

- mindestens eine Schnittstelle, wobei die Schnittstelle eingerichtet ist, ein parametrisiertes Model zu empfangen, wobei das parametrisierte Model basierend auf einem digitalen Trainingsdatensatz trainiert ist, wobei der Trainingsdatensatz eine Mehrzahl von 3D-Simulationen mindestens einer, mit mindestens einem Sensor des Posenbestimmungssystems aufzunehmenden, Szene, welche das Zielobjekt aufweist, und mit jeweils bekannter Pose des Zielobjekts umfasst, wobei das parametrisierte Model mindestens einen Algorithmus zum Bestimmen einer Pose des Zielobjekts aus mit dem Sensor aufgenommenen Daten der Szene umfasst;
- mindestens einen Sensor, wobei der Sensor mindestens einen Bildsensor und/oder mindestens einen Tiefensensor aufweist, wobei der Sensor eingerichtet ist Daten der Szene aufzunehmen;
- mindestens eine Auswerteeinheit, welche eingerichtet ist die aufgenommenen Daten der Szene auszuwerten, wobei das Auswerten ein Bestimmen der Pose des Zielobjekts unter Verwendung des parametrisierten Models umfasst.

Das Posenbestimmungssystem kann eingerichtet sein um das erfindungsgemäße Verfahren zum Bestimmen einer Pose mindestens eines Zielobjekts in einer seiner Ausgestaltungen auszuführen. Für Einzelheiten und Ausführungsformen in Bezug auf das Posenbestimmungssystem wird auf die Beschreibung des erfindungsgemäßen Verfahrens verwiesen.

Das Posenbestimmungssystem kann mindestens eine Ausgabeeinheit aufweisen, welche eingerichtet ist zu einer Ankopplung an einer Robotersteuerung und/oder Robotersynchronisierung.

Das Posenbestimmungssystem kann mindestens eine Trainingseinheit aufweisen. Die Trainingseinheit kann eingerichtet sein, um den Algorithmus basierend auf dem Trainingsdatensatz zu trainieren.

Das Posenbestimmungssystem kann eingerichtet sein, um ein Simulationsverfahren durchzuführen, in welchem die Trainingsdaten mit realen Einflussfaktoren automatisiert synthetisch erzeugt werden.

In einem weiteren Aspekt wird eine Verwendung des erfindungsgemäßen Posenbestimmungssystems zum Bestimmen einer Pose in einer seiner Ausgestaltungen vorgeschlagen zu einem oder mehreren von: Einrichten einer Fertigungslinie, Nachführen eines Roboterarms oder beliebiger Aktuatorik, Steuerung eines Roboters oder beliebiger Aktuatorik, Manipulation des Zielobjekts, Messung des Zielobjekts, Inspektion des Zielobjekts, Zusammenbau des Zielobjekts.

Zusammenfassend werden, ohne Beschränkung weiterer möglicher Ausgestaltungen, folgende Ausführungsformen vorgeschlagen:

Ausführungsform 1: Computerimplementiertes Verfahren zum Bestimmen einer Pose mindestens eines Zielobjekts in einer Szene umfassend die folgenden Schritte:

a) Bereitstellen eines digitalen Trainingsdatensatzes, wobei der Trainingsdatensatz eine Mehrzahl von 3D-Simulationen mindestens einer, mit mindestens einem Sensor eines Posenbestimmungssystems aufzunehmenden, Szene, welche das Zielobjekt aufweist, und mit jeweils bekannter Pose des Zielobjekts umfasst, wobei der Sensor mindestens einen Bildsensor und/oder mindestens einen Tiefensensor aufweist;
b) Parametrisieren eines Models zur Bestimmung der Pose basierend auf dem digitalen Trainingsdatensatz, wobei das Model mindestens einen Algorithmus zum Bestimmen einer Pose des Zielobjekts aus mit dem Sensor aufgenommenen Daten der Szene umfasst;
c) Bereitstellen des parametrisierten Models an das Posenbestimmungssystem;
d) Aufnehmen von Daten der Szene mit dem Sensor;
e) Auswerten der aufgenommenen Daten der Szene, wobei das Auswerten ein Bestimmen der Pose des Zielobjekts unter Verwendung des parametrisierten Models umfasst.

Ausführungsform 2: Verfahren nach der vorhergehenden Ausführungsform, wobei das Verfahren einen Simulationsschritt aufweist, wobei in dem Simulationsschritt die SD-Simulationen erzeugt werden, wobei ein digitales Modell des Zielobjekts verwendet wird.

Ausführungsform 3: Verfahren nach der vorhergehenden Ausführungsform, wobei ein digitales Modell des Sensors verwendet wird.

Ausführungsform 4: Verfahren nach einer der vorhergehenden Ausführungsformen, wobei die 3D-Simulationen jeweils eine dreidimensionale, virtuelle Darstellung der Szene aus mindestens einer Position des Sensors umfassen.

Ausführungsform 5: Verfahren nach der vorhergehenden Ausführungsform, wobei die dreidimensionale, virtuelle Darstellung der Szene Umgebungsmerkmale aufweist, wobei die Umgebungsmerkmale Licht und/oder Formen und/ oder Texturen und/oder Kontraste und/oder Konturen aufweisen.

Ausführungsform 6: Verfahren nach einer der vorhergehenden Ausführungsformen, wobei das Model auf einem maschinell lernenden Algorithmus basiert, wobei der maschinell lernende Algorithmus ein künstliches neuronales Netz nutzt und/oder umfasst, wobei das künstliche neuronale Netz mindestens ein Element aufweist ausgewählt aus der Gruppe bestehend aus: hierarchischen Entscheidungsbäumen, Hough forest, regression forest, Convolutional Neural Network, Residual Neural Network, Pixel-wise Voting, Pixel-wise Fusion Network, deep learning.

Ausführungsform 7: Verfahren nach einem der vorhergehenden Ausführungsformen, wobei der Algorithmus mindestens eines der folgenden Elemente oder Teilverfahren nutzt oder umfasst: Template Matching, (Directional) Chamfer Matching, Iterative Closest Point, Perspective-n-Point, Region-based Gauss-Newton Approach, Random sample consensus (RANSAC), Orts- und/oder Farb-Histogramme, Point-to-Point oder Point-Pair feature, unterschiedliche Punkt-, Form- und Flächendeskriptoren.

Ausführungsform 8: Verfahren nach einer der vorhergehenden Ausführungsformen, wobei Schritt b) einen Testschritt aufweist, wobei in dem Testschritt ein Testdatensatz von Daten der Szene mit bekannter Pose des Zielobjekts verwendet wird, wobei ein Bestimmen der Pose des Zielobj ekts unter Verwendung des parametrisierten Models aus den Daten des Testdatensatzes erfolgt, wobei in dem Testschritt eine Abweichung von der bestimmten und bekannten Pose des Zielobjekts bestimmt wird.

Ausführungsform 9: Verfahren nach einer der vorhergehenden Ausführungsformen, wobei der Algorithmus zum Bestimmen einer Pose des Zielobjekts aus dem Bild des Zielobjekts mindestens einen Posenbestimmungsalgorithmus aufweist, welcher mindestens einen Freiheitsgrad bestimmt, wobei die Freiheitsgrade Translation und/oder Rotation und/oder zeitabhängige Komponenten davon umfassen.

Ausführungsform 10: Verfahren nach einer der vorhergehenden Ausführungsformen, wobei der Algorithmus zum Bestimmen einer Pose einen mehrstufigen Algorithmus umfasst, wobei in einer ersten Stufe eine grobe Posenbestimmung und in einer zweiten Stufe eine feine Posenbestimmung erfolgt, wobei ein Ergebnis der grobe Posenbestimmung als Input für die feine Posenbestimmung verwendet wird.

Ausführungsform 11: Verfahren nach einer der vorhergehenden Ausführungsformen, wobei der Algorithmus zum Bestimmen einer Pose des Zielobjekts aus den Daten der Szene mindestens einen Algorithmus zum Erkennen und zum Selektieren des Zielobjekts aus den Daten umfasst.

Ausführungsform 12: Verfahren nach einer der vorhergehenden Ausführungsformen, wobei die Pose des Zielobjekts eine Information über eine Translation und eine Rotation des Zielobjekts umfasst, wobei sich die Information über die Translation und die Rotation auf ein Koordinatensystem des Sensors bezieht.

Ausführungsform 13: Verfahren nach einer der vorhergehenden Ausführungsformen, wobei das Bereitstellen des Trainingsdatensatzes eine Simulation unter einem Einflussparameter umfasst, wobei der Einflussparameter ein Parameter ist ausgewählt aus der Gruppe bestehend aus: Beleuchtung, Abschattung, Orientierung, Textur, Glanz, Störkonturen, Objektfarbe, Objektzustand, Unschärfen, Sensorrauschen.

Ausführungsform 14: Verwendung des Verfahrens zum Bestimmen einer Pose nach einer der vorhergehenden Ausführungsformen zu einem oder mehreren von: Einrichten einer Fertigungslinie oder Fertigungsinsel, Nachführen eines Roboterarms oder beliebiger Aktuatorik, Steuerung eines Roboters oder beliebiger Aktuatorik, Manipulation des Zielobjekts durch Fixierung, Kleben, Schrauben, Nieten oder ähnlichem, Vermessung des Zielobjekts, Inspektion des Zielobjekts, Zusammenbau des Zielobjekts.

Ausführungsform 15: Computerprogramm, welches bei Ablauf auf einem Computer oder einem Computer-Netzwerk das Verfahren zum Bestimmen einer Pose mindestens eines Zielobjekts nach einer der vorhergehenden Ausführungsformen ausführt.

Ausführungsform 16: Posenbestimmungssystem umfassend:

- mindestens eine Schnittstelle, wobei die Schnittstelle eingerichtet ist, ein parametrisiertes Model zu empfangen, wobei das parametrisierte Model basierend auf einem digitalen Trainingsdatensatz trainiert ist, wobei der Trainingsdatensatz eine Mehrzahl von 3D-Simulationen mindestens einer, mit mindestens einem Sensor des Posenbestimmungssystems aufzunehmenden, Szene, welche das Zielobjekt aufweist, und mit jeweils bekannter Pose des Zielobjekts umfasst, wobei das parametrisierte Model mindestens einen Algorithmus zum Bestimmen einer Pose des Zielobjekts aus mit dem Sensor aufgenommenen Daten der Szene umfasst;
- mindestens einen Sensor, wobei der Sensor mindestens einen Bildsensor und/oder mindestens einen Tiefensensor aufweist, wobei der Sensor eingerichtet ist Daten der Szene aufzunehmen;
- mindestens eine Auswerteeinheit, welche eingerichtet ist die aufgenommenen Daten der Szene auszuwerten, wobei das Auswerten ein Bestimmen der Pose des Zielobjekts unter Verwendung des parametrisierten Models umfasst.

Ausführungsform 17: Posenbestimmungssystem nach der vorhergehenden Ausführungsform, wobei das Posenbestimmungssystem mindestens eine Ausgabeeinheit aufweist, welche eingerichtet ist zu einer Ankopplung an einer Robotersteuerung und/oder Robotersynchronisierung oder vergleichbarer Aktuatorik.

Ausführungsform 18: Posenbestimmungssystem nach einer vorhergehenden, ein Posenbestimmungssystem betreffenden, Ausführungsformen, wobei das Posenbestimmungssystem mindestens eine Trainingseinheit aufweist, wobei die Trainingseinheit eingerichtet ist das Model basierend auf dem Trainingsdatensatz zu trainieren.

Ausführungsform 19: Posenbestimmungssystem nach einer vorhergehenden, ein Posenbestimmungssystem betreffenden, Ausführungsformen, wobei das Posenbestimmungsystem eingerichtet ist um das Verfahren zum Bestimmen einer Pose mindestens eines Zielobjekts nach einem der vorhergehenden, ein Verfahren betreffenden, Ansprüche auszuführen.

Ausführungsform 20: Verwendung des Posenbestimmungssystems zum Bestimmen einer Pose nach einer der vorhergehenden ein Posenbestimmungssystem betreffenden, Ausführungsformen zu einem oder mehreren von: Einrichten einer Fertigungslinie oder Fertigungsinsel, Nachführen eines Roboterarms oder beliebiger Aktuatorik, Steuerung eines Roboters oder beliebiger Aktuatorik, Manipulation des Zielobjekts, Messung des Zielobjekts, Inspektion des Zielobjekts durch Fixierung, Kleben, Schrauben, Nieten oder ähnlichem, Zusammenbau des Zielobjekts.

Kurze Beschreibung der Figuren

Weitere Einzelheiten und Merkmale ergeben sich aus der nachfolgenden Beschreibung von Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:

Figuren 1A und 1B    exemplarische Implementierungen eines erfindungsgemäßen Posenbestimmungssystems;

Figur 2    ein Flussdiagram eines Ausführungsbeispiels des erfindungsgemäßen Verfahrens;

Figuren 3A bis 3C    experimentelle Ergebnisse einer Anwendung des erfindungsgemäßen Verfahrens mit Objektsegmentierung als Zwischenschritt; und

Figur 4    exemplarische Implementierung einer automatisierten synthetischen Datensatzerstellung.

Beschreibung der Ausführungsbeispiele

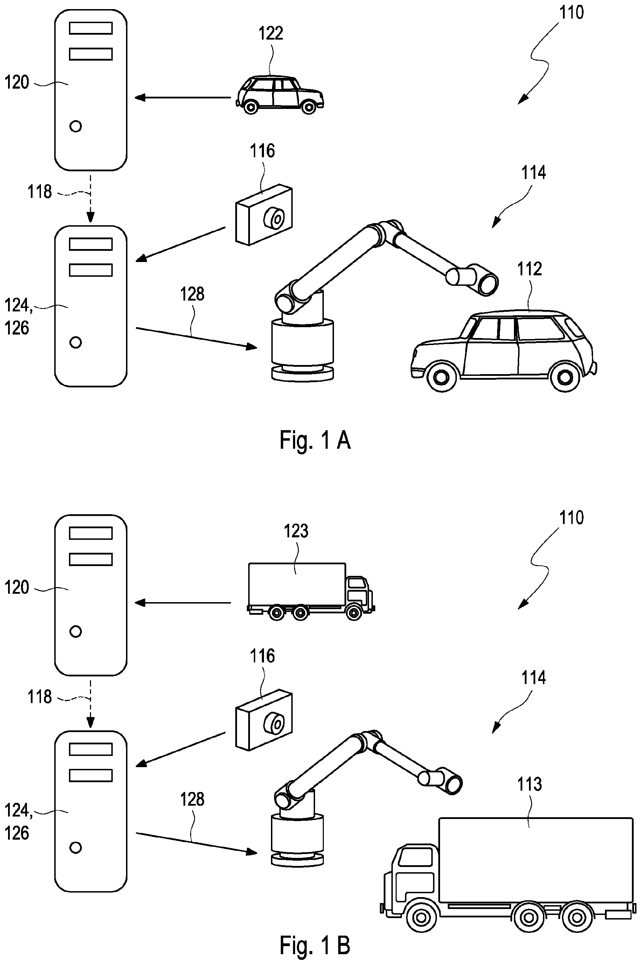

Figuren 1A und 1B zeigen exemplarische Implementierungen eines erfindungsgemäßen Posenbestimmungssystems 110 zum Bestimmen einer Pose mindestens eines Zielobjekts 112 in einer Szene 114. Das Zielobjekt 112 kann beispielsweise ein Automobil oder ein Teil eines Automobils sein. Die Szene 114 kann mindestens eine Umgebung und/oder räumlichen Bereich sein, welcher das Zielobjekt 112 aufweist. Die Szene 114 kann das Zielobjekt 112 und das Zielobjekt 112 umgebende Bereiche aufweisen. Die Szene 114 kann eine Zelle einer Herstellungslinie sein. Die Szene 114 kann weiter eine Aufbaustufe der Fertigungslinie sein.

Die Pose kann eine Kombination von Position und Orientierung des Zielobjekts 112 im dreidimensionalen Raum sein. Die Pose des Zielobjekts 112 im Raum kann sechs Freiheitsgrade aufweisen, beispielsweise drei Translationsfreiheitsgrade und drei Rotationsfreiheitsgrade. Die Pose des Zielobjekts 112 kann eine Information über eine Translation und eine Rotation des Zielobjekts 112 umfassen. Die Information über die Translation und die Rotation kann sich auf ein Koordinatensystem eines Sensors 116 beziehen. Die Translation kann als ein dreidimensionaler Punkt (X, Y, Z) in dem Koordinatensystem des Sensors 116 definiert sein. Die Translation kann durch die Ortskoordinaten X, Y und Z definiert sein. Die Rotation kann als Orientierung oder Kippung definiert werden. Die Rotation kann durch eine Winkelposition definiert sein. Die Rotation kann durch mindestens drei Winkel angegeben werden, beispielsweise Eulerwinkel oder Neigungswinkel, Rollwinkel und Gierwinkel. Die Translation und Rotation des Zielobjektes 112 kann zusammen auch als sechsdimensionale Information oder 6D-Information bezeichnet werden. Ein Bestimmen einer Pose kann ein Bestimmen von Translations- und/oder Rotationsinformationen umfassen. Es sind Ausführungsformen denkbar in welchen das Bestimmen der Pose ein Bestimmen eines Teils der Translations- und/oder Rotationsinformationen umfasst. Beispielsweise können Freiheitsgrade durch Bedingungen vorgebeben sein und/oder Information über Translation und/oder Rotation vorbekannt sein. Beispielsweise kann ein Bestimmen der Pose ein Bestimmen von zwei Translationen (X, Y) und einer Rotation um Z umfassen.

Das Posenbestimmungssystem 110 umfasst mindestens eine Schnittstelle 118, hier durch einen Pfeil dargestellt. Die Schnittstelle 118 ist eingerichtet, ein parametrisiertes Model zu empfangen. Das Modell ist basierend auf einem digitalen Trainingsdatensatz parametrisiert, insbesondere trainiert. Der Trainingsdatensatz umfasst eine Mehrzahl von 3D-Simulationen mindestens einer, mit dem mindestens einen Sensor 116 aufzunehmenden, Szene 114, welche das Zielobjekt 112 aufweist, und mit jeweils bekannter Pose des Zielobjekts 112. Das Model umfasst mindestens einen Algorithmus zum Bestimmen einer Pose des Zielobjekts 112 aus den aufgenommenen Daten der Szene 114.

Das Model kann eine Beschreibung des Zielobjekts und der Pose umfassen, welches in den von dem Sensor 116 aufgenommenen Daten erkannt werden soll. Das Model kann ein Model sein basierend auf einem maschinell lernenden Algorithmus. Das parametrierte Model kann ein trainiertes Model, insbesondere ein Parametersatz sein und/oder umfassen. Alternativ oder zusätzlich, kann das Model auf einem nicht-maschinell lernenden Algorithmus, auch als klassischer Algorithmus bezeichnet, basieren. Das Model kann je nach Implementierung unterschiedlich sein. Das Model kann beispielsweise Linien, und/oder Konturen, und/oder Flächen, und/oder eine Auswahl von physischen Punkten am Objekt, und/oder einen Farbverlauf, und/oder einen Farbgradienten beschreiben. Das Parametrisieren kann ein Bestimmen von Parametern des Models umfassen. Das Parametrisieren kann, insbesondere bei einem Model basierend auf einem maschinell lernenden Algorithmus, ein Trainieren des Models umfassen. Das parametrisierte Model kann aus dem maschinellen Lernen erzeugt werden oder aus einer automatisierten Analyse der Bilddaten und/oder Tiefeninformation, auch als Tiefenbilddaten bezeichnet.

Der Trainingsdatensatz kann ein Datensatz sein, welcher zum parametrisieren den Models, insbesondere zum Trainieren des maschinell lernenden Algorithmus, verwendet wird. Der Trainingsdatensatz umfasst 3D-Simulationen einer Szene 114 mit jeweils bekannter Pose des Zielobjekts 112. Der Trainingsdatensatz kann realitätsnahe Simulationsdaten sein. Die 3D-Simulationen können das Zielobjekt 112 in verschiedenen bekannten Posen, bevorzugt in allen möglichen Positionen, aufweisen. Die möglichen Positionen können durch Randbedingungen begrenzt sein.

Das Posenbestimmungssystem 110 kann eingerichtet sein, den Trainingsdatensatz zu erzeugen. Beispielsweise kann das Posenbestimmungssystem 110 mindestens eine Trainingseinheit 120, auch als Trainingscomputer bezeichnet, aufweisen. Die Trainingseinheit 120 kann mindestens eine Prozessoreinheit, wie einen Prozessor, Mikroprozessor, oder ein Computer System, aufweisen, welche eingerichtet ist für das automatisierte Erstellen eines Models. Die Trainingseinheit 120 kann eingerichtet sein, um den Algorithmus des Models auszuführen. Das Erzeugen des Trainingsdatensatzes und/oder des Trainings des Models kann vollautomatisch erfolgen. Die Trainingseinheit 120 kann selbständig und unbeaufsichtigt arbeiten.

Die Trainingseinheit 120 kann eingerichtet sein, um eine Mehrzahl von 3D-Simulationen der Szene zu erzeugen. Die 3D-Simulationen können jeweils eine virtuelle dreidimensionale Nachbildung der realen Szene umfassen. Ein Ergebnis des Simulationsprozesses wird im Rahmen der vorliegenden Erfindung simulierte Szene genannt. Die simulierte Szene umfasst ein simuliertes Zielobjekt mit bekannter Pose. Die 3D-Simulationen können unter Anwendung mindestens eines Simulationstools erzeugt werden, wie beispielsweise eines Algorithmus und/oder eines Neuronalen Netzwerks.

Bei der Erzeugung der 3D-Simulationen kann ein digitales Modell 122 des Zielobjekts 112 verwendet werden, insbesondere ein Computer-Aided Design and Drafting (CAD) -Modell des Zielobjekts 112, auch als CAD-Daten des Zielobjekts 112 bezeichnet. Das digitale Modell 122 kann eine virtuelle Definition des realen Zielobjekts 112, insbesondere mit oder ohne Beschreibung weiterer Charakteristika wie Farbe, Textur oder Oberflächenbeschaffenheit, umfassen.

Bei der Erzeugung der 3D-Simulationen kann ein digitales Modell des Sensors 116 verwendet werden. Das Erzeugen der 3D-Simulationen kann insbesondere ein Berücksichtigen einer Ausrichtung des Sensors 116 umfassen. Während der Vermessung des realen Zielobjekts 112 können Referenzobjekte oder Kalibrierobjekte in der Szene 114 verwendet werden, welche erkennen lassen, falls sich eine Ausrichtung des Sensors 116 oder eines weiteren Sensors im Verlauf oder im Betrieb verändert.

Die 3D-Simulationen können jeweils eine dreidimensionale, virtuelle Darstellung der Szene 114 aus mindestens einer Position des Bildsensors 116, bevorzugt aus verschiedenen Positionen des Bildsensors 116, umfassen. Das Erzeugen der 3D-Simulationen kann ein Rendering umfassen. Die 3D-Simulationen können realistische 3D-Simulationen umfassen, beispielsweise auf Basis von Virtual Reality Umgebungen. Derartige 3D-Simulationen sind beispielsweise aus dem technischen Gebiet des Gaming bekannt, siehe beispielsweise Unity oder Unreal Engine. Das Generieren der 3D-Simulationen kann mit und/oder unter Verwendung von Modellen realer Umgebungsobjekte und/oder mit Bildern aus typischen Einsatzumgebungen erfolgen. Das Generieren der 3D-Simulationen kann mit und/oder unter Verwendung von bekannten Objekten ähnlicher Beschaffenheit wie das Zielobjekt 112 erfolgen, beispielsweise ähnlicher Farbe und/oder ähnlicher Form und/oder ähnlicher Textur und/oder Glanz und/oder weiterer ähnlicher Beschaffenheiten. Das Bereitstellen des Trainingsdatensatzes, insbesondere das Generieren der 3D-Simulationen, kann eine Simulation unter einem Einflussparameter umfassen, beispielsweise unter Variation des Einflussparameters. Der Einflussparameter kann ein Parameter sein ausgewählt aus der Gruppe bestehend aus: Beleuchtung, Abschattung, Orientierung, Textur, Glanz, Störkonturen, Objektfarbe, Objektzustand, Unschärfen, Sensorrauschen. Die 3D-Simulationen können beispielsweise dreidimensionale, virtuelle Darstellungen mit Teilabschattungen des Zielobjekts 112 von einer Perspektive des Bildsensors 116 aus umfassen. Die 3D-Simulationen können beispielsweise dreidimensionale, virtuelle Darstellungen mit unterschiedlichen Beleuchtungsverhältnissen umfassen. Die 3D-Simulationen können beispielsweise dreidimensionale, virtuelle Darstellungen mit verschiedenen Unschärfen umfassen.

Insbesondere zu einer Reduzierung von Rechenzeit und Rechenaufwand die Trainingseinheit 120 eingerichtet sein, um einen Vorverarbeitungsschritt durchzuführen. In dem Vorverarbeitungsschritt kann eine CAD-Vorverarbeitung erfolgen, wobei die Vorverarbeitung eine Reduktion der CAD-Daten auf einen äußeren sichtbaren Anteil, beispielsweise eine umschließende Hülle, umfasst. So kann eine Bearbeitungszeit in der Vorbereitung und im laufenden Betrieb verkürzt werden.

Das Erzeugen des Trainingsdatensatzes kann automatisch und/oder automatisiert und/oder manuell erfolgen. Beispielsweise kann ein CAD-Modell eingegeben und/oder geladen und/oder ausgewählt werden und die Mehrzahl von 3D-Simulationen erzeugt werden. Die Mehrzahl von Trainingsdatensätze kann hunderte Trainingsdatensätze, insbesondere für das Trainieren maschinell lernender Algorithmen bevorzugt mehrere tausend Trainingsdatensätze, umfassen. Der Trainingsdatensatz kann eine große Anzahl von 3D-Simulationen aufweisen. Für gute und stabile Ergebnisse des trainierten, maschinell lernenden Algorithmus kann eine sehr große Anzahl an 3D-Simulationen mit genauer Kenntnis der Pose des Zielobjekts verwendet werden, beispielsweise mehrere tausend, um ein sogenanntes Overfitting zu vermeiden. Diese große Anzahl kann nicht praktikabel von Hand in realer Umgebung erstellt werden. Erfindungsgemäß wird deshalb vorgeschlagen, automatisiert synthetische Daten herzustellen, die genau so gute Ergebnisse nach dem Training erlauben. So kann auch die tatsächliche Pose für den Trainingsdatensatz sehr einfach automatisiert erstellt werden.

Das Positionsbestimmungssystem 110 weist den mindestens einen Sensor 116 auf, welcher eingerichtet ist die Daten der Szene 114 aufzunehmen. Das Positionsbestimmungssystem 110 kann eine Mehrzahl von Sensoren 116 aufweisen. Der Sensor 116 kann ein Bildsensor und/oder ein Tiefensensor sein. Beispielsweise können mehrere synchrone Kameras verwendet werden. Beispielsweise kann eine Kombination aus Bildsensor und Tiefensensor verwendet werden. Das Generieren der 3D-Simulationen kann jeweils mit und/oder unter Verwendung von einem digitalen Modell der Sensoren 116 und/oder der weiteren Sensoren erfolgen

Der Sensor 116 kann mindestens eine Kamera aufweisen. Der Sensor 116 kann mindestens einen Kamerasensor aufweisen, insbesondere einen pixelierten Kamerasensor. Beispielsweise kann der Sensor 116 ein zweidimensionaler oder ein dreidimensionaler Bildsensor sein. Der Sensor 116 kann eine RGB-Kamera sein und/oder umfassen. Der Sensor 116 kann eingerichtet sein mindestens ein RGB-Bild und/oder ein Graustufenbild zu erzeugen und/oder aufzunehmen. Auch andere Ausgestaltungen sind denkbar. Beispielsweise kann der Sensor 116 eingerichtet sein ein Bild der Szene 114 im infraroten, im visuellen oder im ultravioletten Spektralbereich zu erzeugen und/oder aufzunehmen.

Der Sensor 116 kann eingerichtet sein eine 3D-Information der Szene 114, insbesondere des Zielobjekts, zu bestimmen. Der Sensor 116 kann mindestens eine Tiefenkamera sein und/oder aufweisen, wie beispielsweise eine Flugzeit-(ToF) Kamera und/oder eine Muster-Projektions-Kamera. Der Sensor 116 kann mindestens eine Stereokamera sein und/oder aufweisen. Der Sensor 116 kann mindestens ein 2D- oder 3D-Sensor sein und/oder kann mindestens einen 2D- oder 3D-Sensor aufweisen, welcher auf dem LIDAR ("light detection and ranging")-Messprinzip, auch LADAR (laser detection and ranging) genannt, basiert. Die Tiefeninformation, welche durch den weiteren Sensor gewonnen wird, kann zusammen mit einer zweidimensionalen Abbildung der Szene zu einer 3D-Information der Szene fusioniert werden. Der Sensor 116 kann einen 3D-Bildsensor aufweisen und/oder der Sensor 116 kann einen 2D-Bildsensor und einen weiteren Sensor zur Bestimmung einer Tiefeninformation aufweisen. Die Verwendung von 3D-Information, insbesondere der Tiefeninformation, der Szene 114 kann einen robusteren und zuverlässigeren Betrieb des Posenbestimmungssystems 110 erlauben.

Das Posenbestimmungssystem 110 kann weiter zusätzliche Sensoren zur Überwachung der Zelle, insbesondere eines Raums, einer Fertigungslinie aufweisen.

Das Model umfasst mindestens einen Algorithmus zum Bestimmen einer Pose des Zielobjekts 112 aus einem mit dem Sensor 116 aufgenommenen Daten der Szene 114.

Das Modell zum Bestimmen einer Pose des Zielobjekts 112 aus den aufgenommenen Daten der Szene 114 kann mindestens einen Algorithmus zum Erkennen und zum Selektieren des Zielobjekts 112 aus den aufgenommenen Daten, insbesondere aus den Bilddaten, umfassen. Beispielsweise kann der Algorithmus zum Bestimmen einer Pose eine Bildanalyse und/oder eine Bildverarbeitung umfassen. Die Bildanalyse und/oder die Bildverarbeitung können ein Auswählen eines interessierenden Bereichs (ROI) umfassen. Die Bildanalyse und/oder die Bildverarbeitung kann eine Punkt-, Kanten- oder Flächenerkennung umfassen, welche mittels Deskriptoren beschrieben werden. Beispielsweise kann der Algorithmus zum Bestimmen einer Pose ein sogenanntes Cropping umfassen. Die Bildanalyse und/oder die Bildverarbeitung können ein Anwenden mindestens eines Filters und/oder mindestens eine Transformation umfassen auch unter Zuhilfenahme lokaler Muster oder Kennzeichen zur Extraktion und zum Auffinden charakteristischer Punkte, Kanten oder Flächen.

Beispielsweise kann der Algorithmus zum Bestimmen einer Pose eine Segmentierung umfassen. Die Segmentierung kann ein Erstellen eines binär-Bildes umfassen, wobei das binär-Bild angibt, welche Pixel zum Zielobjekt und welche zum Hintergrund gehören. Das Segment kann eine Anzahl von Bildpixeln umfassen. Die Segmentierung kann ein Zuordnen mindestens einer Kennzeichnung zu jedem Bildpixel umfassen, so dass Bildpixel mit gleichen Charakteristiken, die gleiche Kennzeichnung aufweisen. Die Segmentierung kann eine sogenannte Semantic segmentation umfassen. Die Segmentierung kann eine binäre Segmentierung sein. Die binäre Segmentierung kann ein Kennzeichnen der Bildpixel als "Zielobjekt" und "Hintergrund". Alle Nicht-Zielobjekt Bildpixel können als "Hintergrund" angesehen werden. Neben der Segmentierung kann ein Objekt auch als Ganzes erkannt werden, wobei als Ergebnis kein binäres Bild ausgegeben wird, sondern ein Bildausschnitt, eine sogenannte Bounding Box, in dem sich das Objekt befindet. Diese Art der Objekterkennung erfolgt oft als separater, maschinell lernender Algorithmus häufig implementiert mittels Convolutional Neuronal Networks.

Die Bildanalyse und/oder die Bildverarbeitung kann eine Merkmalextraktion umfassen. Beispielsweise kann die Merkmalextraktion unter Verwendung eines Convolutional Neural Network (CNN) erfolgen. Mittels Filter können aus einem Bild lokale Muster oder Kennzeichen extrahiert werden. Diese Kennzeichen können 0-, 1- oder 2-dimensional sein, also charakteristische Punkte, Kanten oder Flächen beschreiben. Einzelne oder die Kombination solcher Merkmale mit räumlicher Verteilung können ein Zielobjekt 112 auch sehr genau beschreiben und zum Auffinden dienlich sein.

Der Algorithmus zum Bestimmen einer Pose des Zielobjekts aus den aufgenommenen Daten der Szene 114 kann mindestens einen Posenbestimmungsalgorithmus, insbesondere einen 6D-Posenbestimmungsalgorithmus, aufweisen. Der Posenbestimmungsalgorithmus kann mindestens einen Freiheitsgrad bestimmen, wobei die Freiheitsgrade Translation und/oder Rotation und/oder zeitabhängige Komponenten davon umfassen. Die extrahierten Merkmale können als Input für eine Posenbestimmung verwendet werden. Verfahren zum Bestimmen einer Pose eines Zielobjekts 112 unter Verwendung von Merkmalen sind dem Fachmann grundsätzlich bekannt. Beispielsweise kann die Posenbestimmung wie in G. Pavlako et al. "6-DoF Object Pose from Semantic Keypoints", arXiv:1703.04670 beschrieben ausgestaltet sein. Weitere aktuelle Verfahren sind beispielsweise in T. Hodan et al. "BOP: Benchmark for 6D Object Pose Estimation", arXiv:1808.08319 beschrieben.

Beispielsweise kann der Algorithmus zum Bestimmen der Pose auf Basis eines maschinell lernen Algorithmus ausgestaltet sein, wie in C. Wang et al. "DenseFusion: 6D Object Pose Estimation by Iterative Dense Fusion", arXiv:1901.04780, oder in Bugra Tekin, Sudipta N Sinha, and Pascal Fua, "Real-time seamless single shot 6d object pose prediction", Proceedings of the IEEE Conference on Computer Vision and Pattern Recognition, Seiten 292-301, 2018.

Alternativ oder zusätzlich, kann der Algorithmus auch ein nicht-lernender Algorithmus sein, welcher zum Beispiel als Merkmale charakteristische Punkte oder Kanten aus den Bildern extrahiert, siehe M. Imperoli and A. Pretto, "D2CO: Fast and robust registration of texture less objects using the Directional Chamfer Distance", Proc. of 10. International Conference on Computer Vision Systems (ICVS 2015), Seiten 316-328, 2015, oder wie in C. Choi und H. Christensen "3d texture less object detection and tracking: An edge based approach", Intelligent Robots and Systems (IROS), 2012 IEEE/RSJ International Conference, Seiten 3877-3884. IEEE, 2012 beschrieben.

Der Algorithmus zum Bestimmen einer Pose kann einen mehrstufigen Algorithmus umfassen. Beispielsweise kann in einer ersten Stufe eine grobe Posenbestimmung und in einer zweiten Stufe eine feine Posenbestimmung erfolgen. Ein Ergebnis der grobe Posenbestimmung kann als Input für die feine Posenbestimmung verwendet werden. Verfahren zum Bestimmen einer Pose eines Zielobjekts unter Verwendung eines mehrstufigen oder iterativen Algorithmus sind dem Fachmann grundsätzlich bekannt. Beispielsweise kann der mehrstufige Algorithmus wie in C. Choi und H. Christensen "3d texture less object detection and tracking: An edge based approach", Intelligent Robots and Systems (IROS), 2012 IEEE/RSJ International Conference, Seiten 3877-3884. IEEE, 2012 oder in M. Imperoli and A. Pretto, "D2CO: Fast and robust registration of texture less objects using the Directional Chamfer Distance", Proc. of 10. International Conference on Computer Vision Systems (ICVS 2015), Seiten 316-328, 2015, beschrieben, ausgestaltet sein. Die Unterschritte in posenbestimmenden Algorithmen umfassen kann auch die Isolierung des Zielobjekts 112, gefolgt von der eigentlichen Posenbestimmung lediglich auf dem Teilbild des Objekts (Vordergrund), umfassen.

Der Algorithmus zum Bestimmen einer Pose kann eingerichtet sein die Bestimmung der Pose über einen zeitlichen Ablauf und/ oder aus unterschiedlichen Perspektiven zu fusionieren, beispielsweise mit Multiview-Ansätzen oder sogenannter Graphoptimierung unter zu Hilfenahme von Bewegungsdaten oder gegebenen Perspektiven. Insbesondere für bekannte Vorausrichtung der Pose des Zielobjekts 112, können klassische Algorithmen, wie beispielsweise klassische Bildverarbeitungsalgorithmen, verwendet werden. Beispielsweise kann eine genaue Poseninformation durch Vergleich mit einer parallellaufenden Simulation, beispielsweise Rendering, optimiert werden. Robuste Ausführungen dieser Algorithmen können typischerweise charakteristische Kanten, Umrisse und/ oder geometrische Kennzeichen am Zielobjekt 112 ermitteln. Beispielsweise kann der klassische Bildverarbeitungsalgorithmus auf punktbasiertem Abgleich, wie beispielsweise Iterative closest point (ICP), perspective-n-point (PnP), Region-based Gauss-Newton Approach, Random sample consensus (RANSAC) basieren, oder zusätzlich Informationen der Pose zu einem vorausgehenden Zeitpunkt und einer angenommenen, relativen Bewegung, (extended) Kalman Filter (EKF), nutzen.

Das Model kann auf einem maschinell lernenden Algorithmus basieren. Der maschinell lernende Algorithmus kann ein künstliches neuronales Netz nutzen und/oder umfassen. Das künstliche neuronale Netz kann mindestens ein Element aufweisen ausgewählt aus der Gruppe bestehend aus: hierarchischen Entscheidungsbäumen, Hough forest, regression forest, Convolutional Neural Network, Residual Neural Network, Pixel-wise Voting, Pixel-wise Fusion Network, deep learning.

Das Trainieren des maschinell lernenden Algorithmus kann ein Lernen und/oder ein Erzeugen des trainierten Models basierend auf dem Trainingsdatensatz umfassen. Das Trainieren kann ein Anpassen von Modellparametern und/oder eines verwendeten Algorithmus, beispielsweise zum Segmentieren, umfassen. Beispielsweise kann eine Segmentierung alleine auf Basis von Farbinformationen erfolgen, beispielsweise unter Verwendung von Farbfiltern. Als Parameter kann ein Farbton und/oder ein Farbbereich definiert werden. Beispielsweise können verschiedenste Kombinationen aus Merkmalen genutzt werden um das Objekt zuverlässig zu identifizieren. Diese Vielzahl an Dimensionen kann mittels maschinell lernenden Algorithmen auf einfache Art bewältig werden. Dabei muss der zu trainierende Algorithmus oder das zu trainierende Modell eine Vielzahl von Variationen und Ansichten in der Trainingsphase analysieren, um anschließend in der realen Szene die Aufgabe zu bewältigen. Das Trainieren kann ein Lösen eines Optimierungsproblems, insbesondere eines Minimierungsproblems, umfassen. Das Trainieren kann ein Minimieren einer Abweichung $\Delta P$ einer, mit dem maschinell lernenden Algorithmus bestimmten Pose und einer wirklichen, bekannten Pose des Zielobjekts umfassen. Beispielsweise das Trainieren ein Lösen des folgenden Minimierungsproblems umfassen:

$$\Delta P = \frac{1}{M} \sum_{j} \min \left\| (Rx_j + t) - (\widehat{R}_i x_j + t_i) \right\|$$

wobei $x_j$ ist der j. Punkt von M ausgewählten 3D-Punkten des simulierten Zielobjekts ist, p= [R|t] die wirkliche Pose und

$$\hat{p} = [\widehat{R_i}|\widehat{t_i}]$$ die mit dem maschinell lernenden Algorithmus bestimmte Pose, siehe auch C. Wang et al. "DenseFusion: 6D Object Pose Estimation by Iterative Dense Fusion", arXiv:1901.04780.

Die Trainingseinheit 120 kann eingerichtet sein, um das parametrisierte Model zu überprüfen, insbesondere seine Zuverlässigkeit und/oder einen Vertrauensgrad (Konfidenz) des trainierten, maschinell lernenden Algorithmus zu testen. Die Trainingseinheit 120 kann eingerichtet sein, um mindestens einen Testschritt durchzuführen. In dem Testschritt kann ein Testdatensatz von Bildern und/oder Tiefeninformationen der Szene 114 mit bekannter Pose des Zielobjekts 112 verwendet werden. Die Bilder und/oder Tiefeninformationen der Szene 114 können dabei 3D-Simulationen sein. Beispielsweise kann der Testdatensatz ein Teil des gesamten Datensatzes sein, welcher nicht zum Parametrisieren des Models, insbesondere nicht Training des maschinell lernenden Algorithmus, verwendet wird. Alternativ oder zusätzlich kann der Testdatensatz reale, gemessene Bilder und/oder Tiefeninformationen mit bekannter Position des Zielobjekts 112 umfassen. Der Testschritt kann ein Bestimmen der Pose des Zielobjekts 112 unter Verwendung des parametrisierten Models aus den Bildern und/oder Tiefeninformationen des Testdatensatzes erfolgen. In dem Testschritt kann eine Abweichung von der bestimmten Pose und der bekannten Pose des Zielobjekts 112 bestimmt werden.

Der Algorithmus kann eingerichtet sein, um eine reale Sensorinformation, also das Bild des Bildsensors 116 und die Tiefeninformation des Sensors 116, zu interpretieren und Translation und Rotation des Zielobjekts 112 in der realen Welt zu berechnen.

Die Trainingseinheit 120 kann eingerichtet sein, das parametrisierte Model an ein ausführendes System des Posenbestimmungssystems 120 bereitzustellen. Beispielsweise kann das parametrisierte Model von der Trainingseinheit 120 über die Schnittstelle 118 zu einer weiteren Einheit des Posenbestimmungssystem, beispielsweise einer Auswerteeinheit 124 und/oder einer Steuereinheit 126, übermittelt werden.

Die Schnittstelle 118 kann eine Kommunikationsschnittstelle, insbesondere eine Datenschnittstelle sein, welche eingerichtet ist Daten von einer anderen Vorrichtung und/oder von einem Benutzer zu empfangen und/oder Daten von der Schnittstelle an weitere Komponenten der Posenbestimmungssystems 110 und/oder an externe Vorrichtungen zu übermitteln. Die Schnittstelle 118 kann mindestens eine elektronische Schnittstelle und/oder eine Mensch-Maschine-Schnittstelle aufweisen, wie beispielsweise eine Eingabe-/Ausgabe-Vorrichtung wie ein Display und/oder eine Tastatur. Die Schnittstelle 118 kann mindestens eine Datenverbindung aufweisen, beispielweise eine Bluetooth-Verbindung, eine NFC-Verbindung oder eine andere Verbindung. Die Schnittstelle 118 kann mindestens ein Netzwerk aufweisen oder Teil eines Netzwerkes sein. Die Schnittstelle 118 kann mindestens einen Internet-Port, mindestens einen USB-Port, mindestens ein Laufwerk oder ein Webinterface aufweisen.

Die Auswerteeinheit 124 und/oder die Steuereinheit 126 kann mindestens eine Datenverarbeitungseinheit umfassen, beispielsweise mindestens einen Computer oder Mikrocontroller. Die Datenverarbeitungseinheit kann einen oder mehrere flüchtige und/oder nichtflüchtige Datenspeicher aufweisen, wobei die Datenverarbeitungseinheit beispielsweise programmtechnisch eingerichtet sein kann, um das Bild der Szene 114 auszuwerten. Die Auswerteeinheit 124 und/oder die Steuereinheit 126 kann weiterhin mindestens eine Schnittstelle umfassen, beispielsweise eine elektronische Schnittstelle und/oder eine Mensch-Maschine-Schnittstelle wie beispielsweise eine Eingabe-/Ausgabe-Vorrichtung wie ein Display und/oder eine Tastatur. Die Datenverarbeitungseinheit kann einen Prozessor oder eine Prozessoreinheit aufweisen. Die Datenverarbeitungseinheit kann beispielsweise eine arithmetisch-logische Einheit (ALU), eine Gleitkommaeinheit (FPU), wie einen mathematischen Koprozessor oder numerischen Koprozessor, eine Mehrzahl von Registern, und einen Arbeitsspeicher, beispielsweise einen Cache Arbeitsspeicher aufweisen. Die Datenverarbeitungseinheit kann einen Multi-Core-Prozessor aufweisen. Die Datenverarbeitungseinheit kann eine Zentrale Verarbeitungseinheit (CPU) aufweisen. Alternativ oder zusätzlich kann die Datenverarbeitungseinheit eine oder mehrere anwendungsspezifische integrierte Schaltungen und/oder eine oder mehrere Field Programmable Gate Arrays (FPGAs) oder ähnliches aufweisen.

Der Sensor 116 kann Daten, insbesondere ein Bild, der realen Szene 114 aufnehmen und an die Auswerteeinheit 124 übermitteln. Die Auswerteeinheit 124 kann die aufgenommenen Daten der Szene 114 auswerten, wobei das Auswerten ein Bestimmen der Pose des Zielobjekts 114 unter Verwendung des parametrisierten Models umfasst.

Das Posenbestimmungssystem 110 kann mindestens eine Ausgabeeinheit 128 aufweisen, welche in Figuren 1A und 1B symbolisch durch den Pfeil 128 dargestellt ist. Die Ausgabeeinheit 128 kann eingerichtet sein, die bestimmte Pose an eine Robotersteuerung und/oder Robotersynchronisierung oder vergleichbarer Aktuatorik zu übermitteln.

Figur 1A zeigt eine Anwendung des Positionsbestimmungssystems 110 in einer Fertigungslinie zur Automobilherstellung. Die Szene 114 ist dabei eine Zelle der Fertigungslinie. Die Bestimmung der Pose des Zielobjekts 112 in der Zelle kann durch die Simulation bereits soweit digital vorbereitet werden, dass das eigentliche Einrichten einer Zelle einer Fertigungslinie vor Ort einem Software-Update gleichkommt. Dazu kann die Vorbereitung für die Einrichtung ausschließlich auf virtuellen Daten des neuen oder zu integrierenden Zielobjekts erfolgen, also einem CAD-Datensatz, der für eine umfangreiche Datenverarbeitung zur Verfügung gestellt wird. Dabei kann mit Hilfe des CAD-Modells der maschinell lernende Algorithmus eigenständig trainiert werden, insbesondere ohne weitere Interaktion eines Nutzers. Die Arbeitszeit kann sich so auf einen Bruchteil beschränken, weil lediglich ein neues CAD-Modell in die Software eingeladen werden muss. Fehler durch menschliche Einflüsse können vermieden werden, da die Lösung komplett automatisiert arbeitet und auf alle Zellen gleichermaßen ausgerollt werden kann. Für die vereinfachte Einrichtung der Fertigungslinie muss ein Fahrzeugmodell nicht mehr physisch und in den unterschiedlichen Aufbaustufen entlang der Linie vorliegen. Gleichwohl können Tests zur Verifizierung auch an den realen Karosserien vor dem Hoch laufen der Fertigungslinie durchgeführt werden. Eine Stillstandszeit der Fertigungslinie kann auf ein zeitliches Minimum reduziert werden oder sogar entfallen, und das Update der Zellen per Software "on the fly" erfolgen.

Figur 1B zeigt ein Anwendungsbeispiel des Positionsbestimmungssystems 110, bei welchem ein neues Zielobjekt 113 vermessen werden soll. Der Benutzer kann ein neues CAD-Modell 123 in die Trainingseinheit 120 eingeben oder auswählen. Die Trainingseinheit 120 kann eingerichtet sein, automatisch, sobald ein neues CAD-Modell 123 eingegeben oder ausgewählt wird, einen neuen Trainingsdatensatz zu erzeugen und das Model zu parametrisieren. Das re-parametrisierte Model kann zur Bestimmung der Pose des neuen Zielobjekts 113 verwendet werden. Eine Übertragbarkeit auf neue Zielobjekte oder Modelle oder andere Anwendungsfelder ist somit möglich.

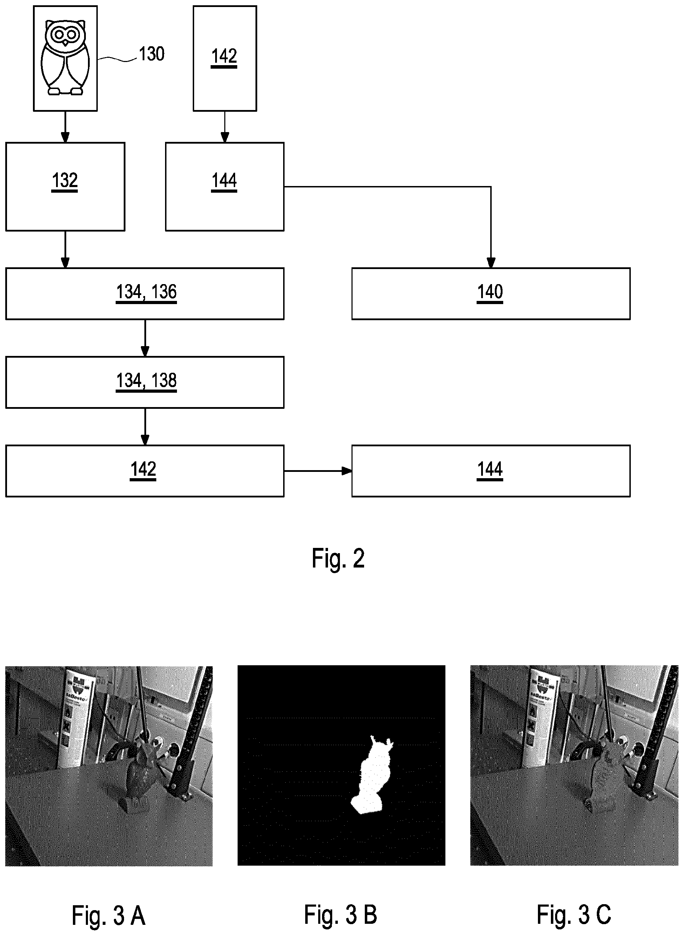

Figur 2 zeigt ein Flussdiagramm eines Ausführungsbeispiels eines erfindungsgemäßen computerimplementierten Verfahrens zum Bestimmen einer Pose mindestens eines Zielobjekts 112 in einer Szene 114. In diesem Beispiel ist das Zielobjekt 112 eine Figur in Form eines, 3D gedruckten Uhus.

In einem ersten Schritt, Bezugsziffer 130, kann der Benutzer ein CAD-Modell des Uhus in die Trainingseinheit 120 eingeben oder auswählen. Die Trainingseinheit 120 kann, insbesondere automatisch, basierend auf dem eingegebenen oder ausgewählten CAD-Modell ein Trainingsdatensatz erzeugen, Bezugsziffer 132. Anschließend kann ein Parametrisieren, Bezugsziffer 134, des Models basierend auf dem digitalen Trainingsdatensatz erfolgen. Die erzeugten 3D-Simulationen können zunächst eine Bildanalyse und/oder Bildverarbeitung und/oder Segmentierung, Bezugsziffer 136, durchlaufen. Weiter kann das Trainieren ein Bestimmen einer Pose des Zielobjekts 112 und ein Lösen eines Optimierungsproblems aufweisen, Bezugsziffer 138.

Das Verfahren kann weiter den mindestens einen Testschritt 140 aufweisen. Für den Testschritt können, wie in Figur 2 dargestellt, beispielsweise 3D-Bilder des realen Zielobjekts 112 mit dem Sensor 116 aufgenommen werden, Bezugsziffer 142. Aus diesen 3D-Bildern kann ein Testdatensatz erzeugt werden, Bezugsziffer 144, insbesondere kann für jedes der 3D-Bilder eine Position des Zielobjekts 112 manuell gemessen werden. Alternativ oder zusätzlich, kann für den Testschritt 140 ein Teil des Trainingsdatensatzes verwendet werden. Die Pose des Zielobjekt 112 wird mit dem parametrisierten Model für jeweils aus den 3D-Bildern des Testdatensatz bestimmt, und eine Abweichung zwischen der bekannten Pose und der mit dem parametrisierten Model bestimmten Pose bestimmt. Die Einzelgenauigkeit ist ausschließlich durch den Sensor begrenzt, beispielsweise bei einem Bildsensor mindestens Pixel-genau, und im System als Fusionierung kann die Genauigkeit sowie die Zuverlässigkeit oder Konfidenz erheblich gesteigert werden.

Das Verfahren umfasst weiter ein Aufnehmen von Daten der Szene 114 mit dem Sensor 116, Bezugsziffer 142, und ein Auswerten der aufgenommenen Daten der Szene 114, Bezugsziffer 144. Das Auswerten umfasst ein Bestimmen der Pose des Zielobjekts 114 unter Verwendung des parametrisierten Models, insbesondere dem trainierten, maschinell lernenden Algorithmus.

Figuren 3A bis 3C zeigen experimentelle Ergebnisse einer Anwendung des erfindungsgemäßen Verfahrens, für das in Figur 2 gezeigt Beispiel. Figur 3A zeigt ein Original Kamerabild. Figur 3B zeigt ein Ergebnis einer Objektsegmentierung. Figur 3C zeigt ein Ergebnis der Rückprojektion der 6d-Posenbestimmung auf die Kamerabildebene.

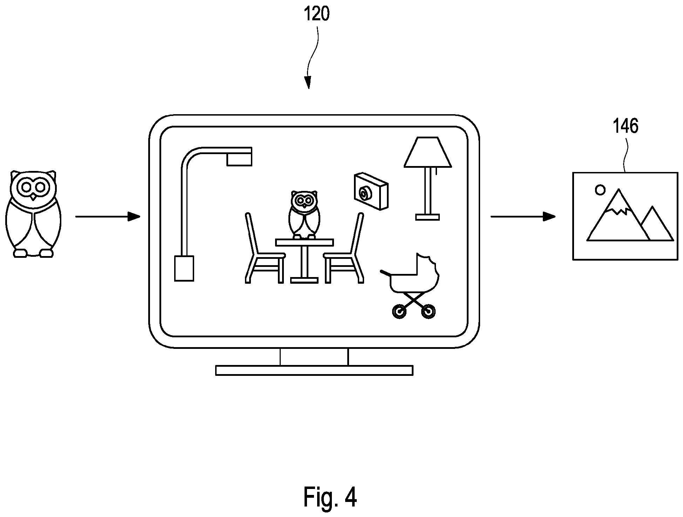

Figur 4 zeigt eine exemplarische Implementierung einer automatisierten synthetischen Datensatzerstellung, mit welcher wesentliche Einflussfaktoren simuliert werden können. Auf dieser Basis kann das dem Algorithmus zu Grunde liegende Model seine Parameter lernen. Das CAD-Model des Uhus wird in die Trainingseinheit 120 eingegeben oder geladen. Die Trainingseinheit 120 kann beispielsweise unter Verwendung einer 3D-Simulationsumgebung wie der Unreal Engine oder Unity 3D-Simulationen erzeugen. Die Trainingseinheit 120 kann eingerichtet sein einen Dataset Synthesizer, beispielsweise in Form eines Plugins von Nvidia® (Nvidia Deep Learning Dataset Synthesizer, NDDS), auszuführen, welcher Bildsegmentierung, Tiefenextraktion, wirklichen Pose, eine Domain Randomisierung und Fotorealistische Daten bereitstellen kann. Der Output 146 der Trainingseinheit 120 ist der Trainingsdatensatz umfassend eine Mehrzahl von Tiefenbildern und/oder 2D-Bildern des Zielobjekts 112 und die zugehörige wirkliche Pose.

Bezugszeichenliste

| 110 | Posenbestimmungssystem |
| 112 | Zielobjekt |
| 113 | Neues Zielobjekt |
| 114 | Szene |

116    Sensor
118    Schnittstelle
120    Trainingseinheit
122    digitales Modell
123    Neues CAD-Modell
124    Auswerteeinheit
126    Steuereinheit
128    Ausgabeeinheit
130    Eingabe CAD-Modell
132    Bereitstellen des digitalen Trainingsdatensatzes
134    Parametrisieren
136    Bildanalyse und/oder Bildverarbeitung
138    Lösen eines Optimierungsproblem
140    Testschritt
142    Aufnehmen von Daten
144    Auswerten der aufgenommenen Daten
146    Output

**Patentansprüche**

1. Computerimplementiertes Verfahren zum Bestimmen einer Pose mindestens eines Zielobjekts (112) in einer Szene (114) umfassend die folgenden Schritte:

   a) Bereitstellen eines digitalen Trainingsdatensatzes, wobei der Trainingsdatensatz eine Mehrzahl von 3D-Simulationen mindestens einer, mit mindestens einem Sensor (116) eines Posenbestimmungssystems (110) aufzunehmenden, Szene (114), welche das Zielobjekt (112) aufweist, und mit jeweils bekannter Pose des Zielobjekts (112) umfasst, wobei der Sensor (116) mindestens einen Bildsensor und/oder mindestens einen Tiefensensor aufweist;

   b) Parametrisieren eines Models zur Bestimmung der Pose basierend auf dem digitalen Trainingsdatensatz, wobei das Model mindestens einen Algorithmus zum Bestimmen einer Pose des Zielobjekts (112) aus mit dem Sensor (116) aufgenommenen Daten der Szene (114) umfasst;

   c) Bereitstellen des parametrisierten Models an das Posenbestimmungssystem (110);

   d) Aufnehmen von Daten der Szene (114) mit dem Sensor (116);

   e) Auswerten der aufgenommenen Daten der Szene (114), wobei das Auswerten ein Bestimmen der Pose des Zielobjekts (112) unter Verwendung des parametrisierten Modells umfasst.

2. Verfahren nach dem vorhergehenden Anspruch, wobei das Verfahren einen Simulationsschritt aufweist, wobei in dem Simulationsschritt die 3D-Simulationen erzeugt werden, wobei ein digitales Modell des Zielobjekts (112) verwendet wird.

3. Verfahren nach einem der vorhergehenden Ansprüche, wobei die 3D-Simulationen jeweils eine dreidimensionale, virtuelle Darstellung der Szene aus mindestens einer Position des Sensors umfassen, wobei die dreidimensionale, virtuelle Darstellung der Szene Umgebungsmerkmale aufweist, wobei die Umgebungsmerkmale Licht und/oder Formen und/oder Texturen und/oder Kontraste und/oder Konturen aufweisen.

4. Verfahren nach einem der vorhergehenden Ansprüche, wobei das Model auf einem maschinell lernenden Algorithmus basiert, wobei der maschinell lernende Algorithmus ein künstliches neuronales Netz nutzt und/oder umfasst, wobei das künstliche neuronale Netz mindestens ein Element aufweist ausgewählt aus der Gruppe bestehend aus: hierarchischen Entscheidungsbäumen, Hough forest, regression forest, Convolutional Neural Network, Residual Neural Network, Pixel-wise Voting, Pixel-wise Fusion Network, deep learning.

5. Verfahren nach einem der vorhergehenden Ansprüche, wobei der Algorithmus mindestens eines der folgenden Elemente oder Teilverfahren nutzt oder umfasst: Template Matching, (Directional) Chamfer Matching, Iterative Closest Point, Perspective-n-Point, Region-based Gauss-Newton Approach, Random sample consensus (RANSAC), Orts- und/oder Farb-Histogramme, Point-to-Point oder Point-Pair feature, unterschiedliche Punkt-, Form- und Flächendescriptoren.

6. Verfahren nach einem der vorhergehenden Ansprüche, wobei der Algorithmus zum Bestimmen einer Pose des Zielobjekts aus dem Bild des Zielobjekts mindestens einen Posenbestimmungsalgorithmus aufweist, welcher mindestens einen Freiheitsgrad bestimmt, wobei die Freiheitsgrade Translation und/oder Rotation und/oder zeitabhängige Komponenten davon umfassen.

7. Verfahren nach einem der vorhergehenden Ansprüche, wobei der Algorithmus zum Bestimmen einer Pose des Zielobjekts aus den Daten der Szene mindestens einen Algorithmus zum Erkennen und zum Selektieren des Zielobj ekts aus den Daten der Szene umfasst.

8. Verfahren nach einem der vorhergehenden Ansprüche, wobei das Bereitstellen des Trainingsdatensatzes eine Simulation unter einem Einflussparameter umfasst, wobei der Einflussparameter ein Parameter ist ausgewählt aus der Gruppe bestehend aus: Beleuchtung, Abschattung, Orientierung, Textur, Glanz, Störkonturen, Objektfarbe, Objektzustand, Unschärfen, Sensorrauschen.

9. Verwendung des Verfahrens zum Bestimmen einer Pose nach einem der vorhergehenden Ansprüche zu einem oder mehreren von: Einrichten einer Fertigungslinie oder Fertigungsinsel, Nachführen eines Roboterarms oder beliebiger Aktuatorik, Steuerung eines Roboters oder beliebiger Aktuatorik, Manipulation des Zielobjekts (112) durch Fixierung, Kleben, Schrauben, Nieten, Vermessung des Zielobjekts (112), Inspektion des Zielobjekts (112), Zusammenbau des Zielobjekts (112).

10. Computerprogramm, welches bei Ablauf auf einem Computer oder einem Computer-Netzwerk das Verfahren zum Bestimmen einer Pose mindestens eines Zielobjekts nach einem der vorhergehenden Ansprüche 1 bis 8 ausführt.

11. Posenbestimmungssystem (110) umfassend:

- mindestens eine Schnittstelle (118), wobei die Schnittstelle (118) eingerichtet ist, ein parametrisiertes Modell zu empfangen, wobei das parametrisierte Modell basierend auf einem digitalen Trainingsdatensatz trainiert ist, wobei der Trainingsdatensatz eine Mehrzahl von 3D-Simulationen mindestens einer, mit mindestens einem Sensor (116) des Posenbestimmungssystems (110) aufzunehmenden, Szene (114), welche das Zielobjekt (112) aufweist, und mit jeweils bekannter Pose des Zielobjekts (112) umfasst, wobei das parametrisierte Model mindestens einen Algorithmus zum Bestimmen einer Pose des Zielobjekts (112) aus mit dem Sensor (116) aufgenommenen Daten der Szene (114) umfasst;
- mindestens einen Sensor (116), wobei der Sensor (116) mindestens einen Bildsensor und/oder mindestens einen Tiefensensor aufweist, wobei der Sensor (116) eingerichtet ist Daten der Szene (114) aufzunehmen;
- mindestens eine Auswerteeinheit (124), welche eingerichtet ist die aufgenommenen Daten der Szene (114) auszuwerten, wobei das Auswerten ein Bestimmen der Pose des Zielobjekts (112) unter Verwendung des parametrisierten Modells umfasst.

12. Posenbestimmungssystem (110) nach dem vorhergehenden Anspruch, wobei das Posenbestimmungssystem (110) mindestens eine Ausgabeeinheit (128) aufweist, welche eingerichtet ist zu einer Ankopplung an einer Robotersteuerung und/oder Robotersynchronisierung oder vergleichbarer Aktuatorik.

13. Posenbestimmungssystem (110) nach einem vorhergehenden, ein Posenbestimmungssystem betreffenden, Ansprüche, wobei das Posenbestimmungsystem (110) mindestens eine Trainingseinheit (120) aufweist, wobei die Trainingseinheit (120) eingerichtet ist das Model basierend auf dem Trainingsdatensatz zu trainieren.

14. Posenbestimmungssystem (110) nach einem vorhergehenden, ein Posenbestimmungssystem betreffenden, Ansprüche, wobei das Posenbestimmungsystem (110) eingerichtet ist um das Verfahren zum Bestimmen einer Pose mindestens eines Zielobj ekts (112) nach einem der vorhergehenden, ein Verfahren betreffenden, Ansprüche auszuführen.

15. Verwendung des Posenbestimmungssystems (110) zum Bestimmen einer Pose nach einem der vorhergehenden ein Posenbestimmungssystem betreffenden, Ansprüche zu einem oder mehreren von: Einrichten einer Fertigungslinie oder Fertigungsinsel, Nachführen eines Roboterarms oder Aktuators, Steuerung eines Roboters oder Aktuators, Manipulation des Zielobjekts (112) durch Fixierung, Kleben, Schrauben, Nieten, Vermessung des Zielobjekts (112), Inspektion des Zielobjekts (112), Zusammenbau des Zielobjekts (112).

Fig. 1 A

Fig. 1 B

Fig. 2

Fig. 3 A

Fig. 3 B

Fig. 3 C

120

146

Fig. 4

**Europäisches Patentamt**
**European Patent Office**
**Office européen des brevets**

# EUROPÄISCHER RECHERCHENBERICHT

Nummer der Anmeldung

EP 20 16 3693

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | THALHAMMER STEFAN ET AL: "SyDPose: Object Detection and Pose Estimation in Cluttered Real-World Depth Images Trained using Only Synthetic Data", 2019 INTERNATIONAL CONFERENCE ON 3D VISION (3DV), IEEE, 16. September 2019 (2019-09-16), Seiten 106-115, XP033653356, DOI: 10.1109/3DV.2019.00021 [gefunden am 2019-10-28] * Zusammenfassung * * Abschnitt 1, Absätze 1, 3, 6; Abbildungen 1, 4 * * Abschnitt 4, Abs. 1-2; Abbildung 2 * * Abschnitt 5, Sätze 1-2; * * Abschnitt 5.1, Absatz 1 und Schritte 1-6; Abbildung 3 * * Abschnitt 5.2 * * Abschnitt 6.1, Satz 1 * ----- | 1-15 | INV. G06T7/70 |
| X | JONATHAN TREMBLAY ET AL: "Deep Object Pose Estimation for Semantic Robotic Grasping of Household Objects", ARXIV.ORG, CORNELL UNIVERSITY LIBRARY, 201 OLIN LIBRARY CORNELL UNIVERSITY ITHACA, NY 14853, 28. September 2018 (2018-09-28), XP080921979, * Abschnitt 1, Absatz 1; Abbildung 5 * * Abschnitt 2.3, Absätze 3, 5; Abbildung 1 * * Abschnitt 3.2 * * Abschnitt 3.6, Absatz 1; Abbildung 5 * ----- -/-- | 1-15 | RECHERCHIERTE SACHGEBIETE (IPC) G06T |

Der vorliegende Recherchenbericht wurde für alle Patentansprüche erstellt

| Recherchenort | Abschlußdatum der Recherche | Prüfer |
|---|---|---|
| München | 31. August 2020 | Kollreider, Klaus |

EPO FORM 1503 03.82 (P04C03)

Seite 1 von 2

Europäisches
Patentamt

European
Patent Office

Office européen
des brevets

## EUROPÄISCHER RECHERCHENBERICHT

Nummer der Anmeldung

EP 20 16 3693

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | VIANNEY LOING ET AL: "Virtual Training for a Real Application: Accurate Object-Robot Relative Localization without Calibration", ARXIV.ORG, CORNELL UNIVERSITY LIBRARY, 201 OLIN LIBRARY CORNELL UNIVERSITY ITHACA, NY 14853, 7. Februar 2019 (2019-02-07), XP081026522, DOI: 10.1007/S11263-018-1102-6 * Abschnitt 1, Absätze 8-9; Abbildung 1 * * Abschnitt 4, Absatz 2 * * Abschnitt 4.1, Absatz 4 * * Abschnitt 4.2; Abbildung 4 * * Abschnitt 5.1, Zeilen 1-9; Abbildung 5 * * Abschnitt 5.2, Absatz 1; Tabelle 1 * ----- | 1-4,6-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 31. August 2020 | Kollreider, Klaus |

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **T. HODAN et al.** *BOP Benchmark for 6D Object Pose Estimation, https://arxiv.org/abs/1808.08319*
- **G. PAVLAKO et al.** *6-DoF Object Pose from Semantic Keypoints*
- **T. HODAN et al.** *BOP: Benchmark for 6D Object Pose Estimation*
- **C. WANG et al.** *DenseFusion: 6D Object Pose Estimation by Iterative Dense Fusion*
- **BUGRA TEKIN ; SUDIPTA N SINHA ; PASCAL FUA.** Real-time seamless single shot 6d object pose prediction. *Proceedings of the IEEE Conference on Computer Vision and Pattern Recognition,* 2018, 292-301
- **M. IMPEROLI ; A. PRETTO.** D2CO: Fast and robust registration of texture less objects using the Directional Chamfer Distance. *Proc. of 10. International Conference on Computer Vision Systems (ICVS 2015),* 2015, 316-328

- 3d texture less object detection and tracking: An edge based approach. **C. CHOI ; H. CHRISTENSEN.** Intelligent Robots and Systems (IROS). IEEE/RSJ International Conference, 2012, 3877-3884
- 3d texture less object detection and tracking: An edge based approach. **C. CHOI ; H. CHRISTENSEN.** Intelligent Robots and Systems (IROS), 2012 IEEE/RSJ International Conference. IEEE, 2012, 3877-3884
- D2CO: Fast and robust registration of texture less objects using the Directional Chamfer Distance. **M. IMPEROLI ; A. PRETTO.** Proc. of 10. International Conference on Computer Vision Systems (ICVS 2015). 2015, 316-328